# EUROPEAN PATENT SPECIFICATION

(11) **EP 3 555 189 B1**
(45) Date of publication and mention of the grant of the patent: **16.03.2022**
(21) Application number: 17847753.5
(22) Date of filing: 15.12.2017
(51) Int. Cl.: C08L 23/08, C08K 5/21

(54) **REPAIRABLE POLYMER COMPOSITIONS**
REPARIERBARE POLYMERZUSAMMENSETZUNGEN
COMPOSITIONS POLYMÈRES RÉPARABLES

(30) Priority: 15.12.2016 GB 201621400
(43) Date of publication of application: 23.10.2019
(73) Proprietor: Kinectrics UK Limited, Surrey Research Park Guildford Surrey GU2 7YD (GB)
(72) Inventor: BAKER, Benjamin, Reading Berkshire RG6 6AH (GB); HAYES, Wayne, Reading Berkshire RG6 6AH (GB); COLQUHOUN, Howard, Reading Berkshire RG6 6AH (GB); HASAN, Erol, Reading Berkshire RG6 6AH (GB)
(74) Representative: Newcombe, Christopher David
(86) International application number: PCT/GB2017/053758
(87) International publication number: WO 2018/109487

(56) References cited:
- WO-A1-2006/041398
- GB-A- 949 630
- GB-A- 1 031 708
- US-A- 2 893 972
- US-A1- 2003 166 798
- US-A1- 2016 152 809
- RODRIGUEZ FERNANDO ET AL: "New Bis(2-aminoimidazoline) and Bisguanidine DNA Minor Groove Binders with Potent in Vivo Antitrypanosomal and Antiplasmodial Activity", JOURNAL OF MEDICINAL CHEMISTRY, AMERICAN CHEMICAL SOCIETY, vol. 51, 1 January 2008 (2008-01-01), pages 909-923, XP002534118, ISSN: 0022-2623, DOI: 10.1021/JM7013088 [retrieved on 2008-02-05] cited in the application
- BAKER BENJAMIN C ET AL: "Nitroarylurea-terminated supramolecular polymers that exhibit facile thermal repair and aqueous swelling-induced sealing of defects", POLYMER, vol. 140, 15 February 2018 (2018-02-15), pages 1-9, XP085361261, ISSN: 0032-3861, DOI: 10.1016/J.POLYMER.2018.02.029

## Description

### Field of invention

The present invention relates to the field of repairable polymeric systems, compositions and articles comprising such systems, and the use of additives in such systems.

### Background

Polymeric systems are widely used in a huge number of applications, including applications in which robust mechanical properties are desired (e.g. in the field of protective coatings). However, when damaged, the polymeric matrix of a traditional polymer system can only be repaired in limited circumstances, and the polymeric system may no longer be useful for its intended purpose. The introduction of healability within a polymeric system is thus desirable in applications including but not limited to polymeric protection systems.

Healable polymeric systems are known, and include for example systems based on the encapsulation approach in which liquid monomers are released and polymerised as a result of a fracture event, and the reversible covalent bond approach as an example of self-healing polymer networks. These approaches offer routes to healability, but often have limited break-heal cycles, reduced strength and toughness and may require external stimuli to initiate healing. There is therefore a need to provide polymeric systems having healable properties while also providing desirable mechanical properties. US2016152809A1 discloses a blend of self-healing polymers and non self-healing polymers, wherein the self-healing polymers are typically poly(ethylene-co-methacrylic acid) (Surlyn^{®}).

### Summary of invention

Surprisingly, it has now been found that an m-nitrophenylurea motif can be used to promote healability of a polymeric system while also providing structural organisational capabilities through a supramolecular network.

Accordingly, in one aspect, the present invention provides a self-healing polymer system having a weight average molecular weight greater than 650 Da, wherein the polymer system comprises an m-nitrophenylurea moiety.

In another aspect, the present invention provides a polymeric protection system for protecting a pipe or a cable, the polymeric protection system comprising a self-healing polymer system of the present invention.

In a further aspect, the present invention provides a pipe or cable comprising a polymeric protection system of the present invention.

In a still further aspect, the present invention provides use of a component comprising an m-nitrophenylurea moiety to provide healability and/or improve mechanical properties of a polymeric system.

In some embodiments, the self-healing polymeric system of the present invention comprises a polymeric component and a low molecular weight additive, wherein the low molecular weight additive comprises an m-nitrophenylurea moiety. The low molecular weight additive may have a molecular mass of 650 Da or less, provided the polymeric system as a whole has a weight average molecular weight greater than 650 Da.

In some embodiments of the present invention, the self-healing polymer system comprises a polymeric component, and the polymeric component comprises an m-nitrophenylurea moiety. In such embodiments, the m-nitrophenylurea moiety is covalently bound to a polymeric component of the polymer system.

When the m-nitrophenylurea moiety is covalently bound to a polymeric component of the self-healing polymer system, the m-nitrophenylurea moiety is typically present at a terminus of the polymeric component. When the m-nitrophenylurea moiety is covalently bound to a polymeric component of the polymer system, the repeat unit in the polymeric component typically does not comprise a m-nitrophenyl urea unit as a side-chain. In some embodiments of the invention in which the m-nitrophenylurea moiety is covalently bound to a polymeric component of the polymer system, the repeat unit in the polymeric component is derivable from a monomer which does not comprise a m-nitrophenyl urea unit.

In certain embodiments, the self-healing polymer system of the present invention comprises a component represented by Formula (I):

W-X **Formula (I)**

wherein, in Formula (I), X is a group comprising one or more sections of polymer chain or a group represented by Formula (II):

^{∗}-CO-R **Formula (II)**

and W is a group represented by Formula (III): 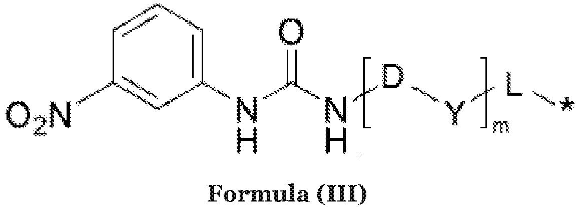 wherein, in formulae (II) and (III):
R is hydrogen, -OH, -O-[M]ₐ, -NH₂, halo or a group selected from C₁-C₆ alkyloxy, C₂-C₆ alkenyloxy or C₂-C₆ alkynyloxy, wherein said group is unsubstituted or substituted with one or more substituent Z;
L is a single bond or a group selected from C₁-C₂₀ alkylene, C₂-C₂₀ alkenylene and C₂-C₂₀ alkynylene, wherein said group is unsubstituted or substituted with one or more substituent Z;
each Y is independently a group selected from -CO-NR¹-, -NR¹-CO-, -O-CO-NR¹-, -NR¹-CO-O-, -NR¹-CO-NR²-, -O-CO-, -CO-O-, -O-CO-O-, -CO-, -O-, -S(O)ₒ₋₂-, -SO₂-NR¹-, and -NR¹-SO₂-;
R¹ and R² are each independently hydrogen, or a group selected from C₁-C₆ alkyl, C₂-C₆ alkenyl or C₂-C₆ alkynyl, wherein said group is unsubstituted or substituted with one or more substituent Z;
each D is independently a group selected from C₆-C₁₄ arylene and 5- to 14-membered heteroarylene, wherein said group is unsubstituted or substituted with one or more substituent Z¹;
m is o or an integer from 1 to 3;
each Z is independently halo, -OH, -NH₂, cyano or nitro;
each Z¹ is independently Z or a group selected from C₁-C₆ alkyl, C₂-C₆ alkenyl or C₂-C₆ alkynyl, wherein said group is unsubstituted or substituted with one or more substituent Z;
M is a counterion;
a is a molar ratio of M to the group of Formula (II) and is 0.5 or 1; and
^{∗} represents a point of attachment to the remainder of the component of Formula (I).

### Brief description of the figures

Figure 1 is a schematic depiction of the intermediate stages involved in the self-healing mechanism of an ionomer.
Figure 2 is a schematic depiction of a self-healing polymer system according to certain embodiments of the invention.
Figure 3 is a schematic depiction of a self-healing polymer system according to certain embodiments of the invention.
Figure 4 depicts polarising optical microscope images of a self-healing polymer system according to an embodiment of the present invention and a comparative example.
Figure 5 depicts the results of mechanical testing of a self-healing polymer system according to an embodiment of the present invention.

### Detailed description of the invention

As used herein, unless otherwise specified the average molecular weight of a self-healing polymer system is typically the weight average molecular weight (M_{w}).

As used herein a C₁-C₂₀ alkylene group is a linear or branched divalent saturated hydrocarbon group having from 1 to 20 carbon atoms, for example 1 to 15 carbon atoms, 1 to 12 carbon atoms (e.g. 8 to 12 carbon atoms), 1 to 10 carbon atoms (e.g. 6 to 8 carbon atoms), 1 to 6 carbon atoms or 1 to 4 carbon atoms. Examples of C₁-C₂₀ alkylene groups include methylene, linear or branched ethylene, linear or branched propylene, linear or branched butylene, linear or branched pentylene, linear or branched hexylene, linear or branched heptylene, linear or branched octylene, linear or branched nonylene, linear or branched decylene, linear or branched undecylene, linear or branched dodecylene, linear or branched tridecylene, linear or branched tetradecylene, linear or branched pentadecylene, linear or branched hexadecylene, linear or branched heptadecylene, linear or branched octadecylene, linear or branched nonadecylene, and linear or branched eicosylene.

As used herein a C₂-C₂₀ alkenylene group is an alkylene group as described above having from 2 to 20 carbon atoms and in which one or more (e.g. 1, 2 or 3) carbon-carbon single bonds are replaced with a carbon-carbon double bond. An alkenylene group may have "cis" or "trans" orientation, or alternatively "E" or "Z" orientation.

As used herein a C₂-C₂₀ alkynylene group is an alkylene group as described above having from 2 to 20 carbon atoms and in which one or more (e.g. 1, 2 or 3) carbon-carbon single bonds are replaced with a carbon-carbon triple bond.

As used herein a halo group is a fluoro, chloro, bromo or iodo group. Typical halo groups include fluoro, chloro, and bromo (e.g. fluoro and chloro).

As used herein a C₁-C₆ alkyl group is a linear or branched monovalent saturated hydrocarbon group having from 1 to 6 carbon atoms, for example 1 to 4 carbon atoms, or 1 to 2 carbon atoms. Examples of C₁-C₆ alkyl groups include methyl, ethyl, n-propyl, i-propyl, n-butyl, i-butyl, t-butyl, n-pentyl, i-pentyl (i.e. 3- methylbut-1-yl), t-pentyl (i.e. 2-methylbut-2-yl), neopentyl (i.e. 2,2-dimethylpropan-1-yl), n-hexyl, i-hexyl (i.e. 4-methylpentan-i-yl), t-hexyl (i.e. 3-methylpentan-3-yl) and neopentyl (i.e. 3,3-dimethylbutan-1-yl).

As used herein a C₂-C₆ alkenyl group is an alkyl group as defined above having 2 to 6 carbon atoms in which one or more (e.g. 1, 2, or 3) carbon-carbon single bonds are replaced with a carbon-carbon double bond. An alkenyl group may have "cis" or "trans" orientation, or in an alternative notation "E" or "Z" orientation.

As used herein a C₂-C₆ alkynyl group is an alkyl group as defined above having 2 to 6 carbon atoms in which one or more (e.g. 1, 2, or 3) carbon-carbon single bonds are replaced with a carbon-carbon triple bond.

As used herein a C₁-C₆ alkyloxy group is a C₁-C₆ alkyl group as described above attached to the remainder of the compound in which it is present via an oxygen atom. As used herein a C₂-C₆ alkenyloxy group is a C₂-C₆ alkenyl group as described above attached to the remainder of the compound in which it is present via an oxygen atom. As used herein a C₂-C₆ alkynyloxy group is a C₂-C₆ alkynyl group as described above attached to the remainder of the compound in which it is present via an oxygen atom.

As used herein a C₆-C₁₄ arylene group is a monocyclic or polycyclic divalent aromatic hydrocarbon group having 6 to 14 ring carbon atoms, e.g. 6 to 10 ring carbon atoms. All rings in a polycyclic arylene group are aromatic. Examples of C₆-C₁₄ arylene groups include phenylene, naphthylenylene, anthracenylene and phenanthrenylene.

As used herein a 5- to 14- membered heteroarylene is a monocyclic or polycyclic divalent aromatic group having 5 to 14 ring members, e.g. 6 to 10 ring members, and at least one (e.g., 1, 2, 3 or 4) ring heteroatom selected from N, O and S. All rings in a polycyclic heteroarylene group possess aromaticity. Examples of 5- to 14- membered heteroarylene groups include pyridylene, pyrazinylene, pyrimidinylene, pyridazinylene, furanylene, thienylene, pyrazolidinylene, pyrrolylene, oxadiazolylene, oxazolylene, isoxazolylene, thiazolylene, thiadiazolylene, imidazolylene, pyrazolylene, indole, isoindole, indazole, benzimidazole, benzofuran, benzothiophene, quinoline and isoquinoline groups.

For the avoidance of doubt, although the above definition of a heteroarylene group refers to an "N" atom which can be present in the ring, as will be evident to a skilled chemist the N atom will be protonated (or will carry a substituent as defined above) if it is attached to each of the adjacent ring atoms via a single bond. Such protonated forms are embraced within the present definitions of heteroarylene groups.

When a group is described herein as substituted with one or more substituents, it is typically substituted with 1, 2, 3 or 4 substituents. In certain embodiments such groups may be substituted with 1, 2 or 3 substituents, 1 or 2 substituents, or 1 substituent.

As used herein, a "polymer chain" or "section of polymer chain" refers to a plurality of chemical subunits (monomer units), each subunit covalently bound to one or more other subunits, to form a chain comprising repeating subunits. Any polymer chain or section of polymer chain may be made up of a plurality of the same subunit (e.g. in the case of a homopolymer) or a plurality of different subunits (e.g. in the case of a block copolymer, random co-polymer and terpolymer). A polymer chain or section of polymer chain may be linear or branched. Examples of polymer chains include polyolefins such as polyethylene (PE), polypropylene (PP) and ethylene-propylene copolymer; polyacids such as polyacrylic acid, polymethacrylic acid and polyethylene sulfonic acid; ionomers such as poly(ethylene-co-acrylic acid) (pEAA) and poly(ethylene-co-methacrylic acid) (pEMAA); and polyalkylene glycols such as polyethylene glycol (PEG) and polypropylene glycol (PPG); and copolymers of olefins and unsaturated esters such as poly(ethylene-co-vinyl acetate) (EVA) and poly(ethylene-co-butyl acrylate) (EBA).

In the present invention, the presence of an m-nitrophenylurea moiety in a polymer system may result in a healable polymer system. Healability can result from a polymer system where reversible interactions, including non-covalent interactions that operate between m-nitrophenylurea groups, that have been broken are able to reform. Healability maybe possible in the absence of external stimuli, or alternatively can be induced by external stimuli such as the application of heat or pressure.

Typically, reversible non-covalent interactions (e.g. hydrogen bonds) may be formed between a plurality of m-nitrophenylurea moieties in the polymer system of the present invention to form a supramolecular non-covalent network. Each urea group can donate two hydrogen bonds, and each nitro group can accept two hydrogen bonds. The presence of the m-nitrophenylurea group in the polymer systems of the present invention may therefore allow for formation of a supramolecular network of intermolecular hydrogen bonding, for example between a nitro group of one molecule and a urea group of another molecule.

Effective formation of a supramolecular non-covalent network is promoted by the ability of each m-nitrophenylurea moiety to donate two intermolecular hydrogen bonds to one or more hydrogen bond acceptor in an adjacent moiety (e.g. an adjacent m-nitrophenylurea moiety), and to accept two intermolecular hydrogen bonds from one or more hydrogen bond donor in an adjacent moiety (e.g. an adjacent m-nitrophenylurea moiety). For any given m-nitrophenylurea moiety, the adjacent moiety comprising the one or more hydrogen bond acceptor to which hydrogen bonds are donated may be the same as or different from the adjacent moiety comprising the one or more hydrogen bond donor from which hydrogen bonds are accepted. For example, an m-nitrophenylurea moiety in a first molecule may donate one or more hydrogen bonds to an m-nitrophenyl moiety in a second molecule, and an m-nitrophenylurea moiety in the first molecule may accept one or more hydrogen bonds from an m-nitrophenylurea moiety in a third molecule. The m-nitrophenylurea moieties in the second and third molecules may likewise donate or accept hydrogen bonds to/from m-nitrophenylurea moieties in fourth and fifth molecules, etc. thereby forming a supramolecular network of reversible hydrogen bonds throughout the polymer system. Effective formation of a supramolecular non-covalent network is promoted by the location of the hydrogen bond-accepting nitro group meta to the hydrogen bond donating urea group, and may promote the formation of a polymer system with desirable elastomeric, rather than semicrystalline or amorphous polymer related properties.

The self-healing polymer system of the present invention typically comprises a m-nitrophenyl urea unit in an amount of up to 60 wt%, e.g. up to 55 wt %, up to 50 wt %, up to 45 wt%, up to 40 wt% up to 35 wt%, up to 30 wt% or up to 25 wt%, based on the weight of the polymer system. Preferably, the polymer system of the present invention comprises a m-nitrophenyl urea unit in an amount of up to 50 wt% based on the weight of the polymer system.

In some embodiments, the polymer system of the present invention comprises a component represented by Formula (I):

W-X **Formula (I)**

wherein, in Formula (I), X is a group comprising one or more sections of polymer chain or a group represented by Formula (II):

^{∗}-CO-R **Formula (II)**

and W is a group represented by Formula (III): 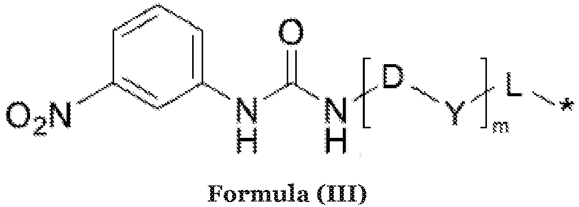 wherein, in formulae (II) and (III):
R is hydrogen, -OH, -O-[M]ₐ, -NH2, halo or a group selected from C₁-C₆ alkyloxy, C₂-C₆ alkenyloxy or C₂-C₆ alkynyloxy, wherein said group is unsubstituted or substituted with one or more substituent Z;
L is a single bond or a group selected from C₁-C₂₀ alkylene, C₂-C₂₀ alkenylene and C₂-C₂₀ alkynylene, wherein said group is unsubstituted or substituted with one or more substituent Z;
each Y is independently a group selected from -CO-NR¹-, -NR¹-CO-, -O-CO-NR¹-, -NR1-CO-O-, -NR¹-CO-NR²-, -O-CO-, -CO-O-, -O-CO-O-, -CO-, -O-, -S(O)ₒ₋₂-, -SO₂-NR¹-, and -NR¹-SO₂-;
R¹ and R² are each independently hydrogen, or a group selected from C₁-C₆ alkyl, C₂-C₆ alkenyl or C₂-C₆ alkynyl, wherein said group is unsubstituted or substituted with one or more substituent Z;
each D is independently a group selected from C₆-C₁₄ arylene and 5- to 14-membered heteroarylene, wherein said group is unsubstituted or substituted with one or more substituent Z¹;
m is o or an integer from 1 to 3;
each Z is independently halo, -OH, -NH₂, cyano or nitro;
each Z¹ is independently Z or a group selected from C₁-C₆ alkyl, C₂-C₆ alkenyl or C₂-C₆ alkynyl, wherein said group is unsubstituted or substituted with one or more substituent Z;
M is a counterion;
a is a molar ratio of M to the group of Formula (II) and is 0.5 or 1; and
^{∗} represents a point of attachment to the remainder of the component of Formula (I).

Typically, R is -OH, -O-[M]ₐ, - or C₁-C₆ alkyloxy. Preferably, R is - OH, -O-M⁺ or methoxy. More preferably, R is -OH or -O-[M]ₐ. Still more preferably R is -OH.

Typically, each L is independently a single bond or a C₁-C₆ alkylene group, wherein said group is unsubstituted or substituted with one two or three substituents Z. Preferably, each L is independently a single bond, or a group selected selected from methylene and ethylene, wherein said group is unsubstituted or substituted with one substituent Z. More preferably, each L is independently a single bond, or a group selected selected from methylene and ethylene, wherein said group is unsubstituted.

Typically, each Y is independently a group selected from -CO-NR¹-, -NR¹-CO-, -O-CO-NR¹-, -NR¹-CO-O-, -NR¹-CO-NR²-, -O-CO-, -CO-O-, -O-CO-O-, -CO-, -O-, -S(O)ₒ₋₂-, -SO₂-NR¹-, and -NR¹-SO₂-. Preferably, each Y is independently a group selected from -CO-NR¹-, -NR¹-CO-, -O-CO-NR¹-, -NR1-CO-O-, -NR¹-CO-NR²-, -O-CO-, -CO-O-, -O-CO-O-, -CO- and -O-. More preferably, each Y is independently a group selected from -CO-NR¹-, -NR¹-CO-, -O-CO-NR¹-, -NR1-CO-O-, -NR¹-CO-NR²-, -O-CO-, -CO-O-, -CO- and -O-. Still more preferably, each Y is independently a group selected from -NR¹-CO-, -O-CO-NR¹-, -NR¹-CO-O-, -NR¹-CO-NR²- and -O-.

Typically, each R¹ and R² is independently hydrogen, or a C₁-C₆ alkyl group, wherein said group is unsubstituted or substituted with one two or three substituents Z. Preferably, each R¹ and R² is independently hydrogen or an unsubstituted methyl group. More preferably, R¹ and R² are each hydrogen.

Typically, each D is independently a group selected from phenylene and 6-membered heteroarylene, wherein said group is unsubstituted or substituted with one two or three substituents Z¹. Preferably, each D is phenylene and is unsubstituted or substituted with one substituent Z¹. More preferably, each D is a phenylene group, and is unsubstituted or substituted by one methyl group.

Typically, m is 1 or 2. When m is 1 or more, pi-pi stacking interactions between the aryl and/or heteroaryl groups represented by the phenyl group and D in Formula (III) may contribute to the formation of a supramolecular non-covalent network in the polymer system of the present invention.

Typically, each Z is independently F, Cl, -OH, or -NH₂.

Typically, each Z¹ is independently F, Cl, -OH, -NH₂ or C₁-C₆ alkyl. Preferably, each Z¹ is independently C₁-C₆ alkyl. More preferably, each Z¹ is methyl.

Typically, M carries a charge of 1+ or 2+. When M carries a charge of 1+, a is typically 1. When M carries a charge of 2+, a is typically 0.5. M may be a metal ion, a main group cation or an organic cation. Typically, M is ammonium, alkylammonium, arylphosphonium, Na⁺, K⁺, Mg²⁺ or Ca²⁺. Preferably, M is Na⁺, K⁺, Mg²⁺ or Ca²⁺. More preferably, M is Na+ or K+, and a is 1. Still more preferably, M is Na+ and a is 1.

In certain preferred embodiments:
R is -OH, -O-[M]ₐ, - or C₁-C₆ alkyloxy;
each L is independently a single bond or a C₁-C₆ alkylene group, wherein said group is unsubstituted or substituted with one two or three substituents Z;
each Y is independently selected from -CO-NR¹-, -NR¹-CO-, -O-CO-NR¹-, -NR¹-CO-O-, -NR¹-CO-NR²-, -O-CO-, -CO-O-, -O-CO-O-, -CO- and -O-;
each R¹ and R² is independently hydrogen, or a C₁-C₆ alkyl group, wherein said group is unsubstituted or substituted with one two or three substituents Z;
each D is independently a group selected from phenylene and 6-membered heteroarylene, wherein said group is unsubstituted or substituted with one two or three substituents Z¹;
m is independently 1 or 2;
each Z is independently F, Cl, -OH, or -NH₂;
each Z¹ is independently F, Cl, -OH, -NH₂ or C₁-C₆ alkyl; and
M is Na⁺, K⁺, Mg²⁺ or Ca²⁺.

In certain more preferred embodiments, in Formulae (I), (II) and (III):
R is - OH, -O-M or methoxy;
each L is independently a single bond, or a group selected selected from methylene and ethylene, wherein said group is unsubstituted;
each Y is independently selected from -CO-NR¹-, -NR¹-CO-, -O-CO-NR¹-, -NR¹-CO-O-, -NR¹-CO-NR²- and -O-;
each R¹ and R² is independently hydrogen or a methyl group, wherein said group is unsubstituted;
each D is independently a phenylene group, wherein said group is unsubstituted or substituted by one methyl group;
m is independently 1 or 2;
M is Na⁺ or K+; and
a is 1.

In certain particularly preferred embodiments, in formulae (I), (II) and (III):
R is -OH or -O⁻[M]ₐ;
each L is independently a single bond, or a group selected from methylene and ethylene, wherein said group is unsubstituted;
each Y is independently a group selected from -NR¹-CO-, -O-CO-NR¹-, -NR¹-CO-O-, -NR¹-CO-NR²- and -O-;
R¹ and R² are each hydrogen;
each D is a phenylene group, and is unsubstituted or substituted by one methyl group;
m is 1 or 2;
M is Na⁺; and
a is 1.

The present invention embraces all geometric and positional isomers of components of the Formula (I) as defined above. For example, if a component of Formula (I) incorporates a double bond, the *cis-* and trans- isomers, as well as mixtures thereof, are embraced within the scope of the invention. Both the single positional isomers and mixture of positional isomers are also within the scope of the present invention.

The components of Formula (I) may exist in different tautomeric forms, and all such forms are embraced within the scope of the invention. The term "tautomer" or "tautomeric form" refers to structural isomers of different energies which are interconvertible via a low energy barrier. For example, proton tautomers (also known as prototropic tautomers) include interconversions via migration of a proton, such as keto-enol tautomerizations. Valence tautomers include interconversions by reorganization of some of the bonding electrons.

In some embodiments, the self-healing polymeric system of the present invention comprises one or more polymeric component and a low molecular weight additive, wherein the low molecular weight additive comprises an m-nitrophenylurea moiety. In such embodiments the component comprising the m-nitrophenylurea moiety is not covalently bound to the polymeric component. The polymeric component may be a component comprising one or more sections of polymer chain. The low molecular weight additive typically has a molecular weight of 650 Da or less, e.g. 600 Da or less, 500 Da or less, or 400 Da or less). The low molecular weight additive is typically not covalently bonded to the polymeric component. Typically, the low molecular weight additive comprising an m-nitrophenylurea moiety is a component of Formula (I'):

W-CO-R **Formula (I')**

wherein W and R are as defined herein in connection with Formulae (I) and (II).

Preferred examples of an additive of Formula **(I')** include the following compound as well as salts (e.g. the sodium salt) thereof:

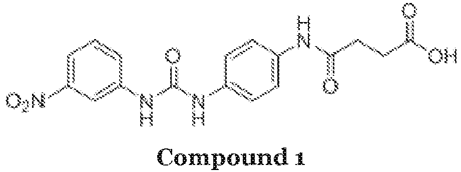

In embodiments where the self-healing polymeric system of the present invention comprises one or more polymeric component and a low molecular weight additive (e.g of Formula (I')), the one or more polymeric component may be any polymeric component, such as a polyolefin, a polyacid, an ionomer, a polyalklene glycol, a copolymer, a terpolymer a polyester, a polycarbonate, a polyamide, a polyurea, a polyurethane, a polyether (e.g. a polyether other than a poly(alkylene glycol)), a poly(alkenyl halide), a polyarylene, a poly(siloxane) or a mixture thereof. Typically, the polymeric component is a polyolefin, a polyacid, an ionomer, a polyalklene glycol, a copolymer, a termpolymer, or a mixture thereof. Preferably, the polymeric component is an ionomer or polyacid.

As used herein an ionomer or polyacid is a polymer that comprises ionisable repeating units. Ionisable units comprise an ionisable group, which may be covalently bonded to the polymer backbone as a pendant group, either proximally or remotely. As used herein, an ionisable group bonded proximally to the polymer backbone is attached directly to the polymer backbone via a covalent bond. As used herein, an ionisable group bonded remotely to the polymer backbone is attached via a linker group (e.g. a C₁-C₂₀ alkylene or C₆-C₁₄ arylene linker group). The ionisable group maybe a carboxylic or sulfonic acid group. The ionisable groups in the ionomer or polyacid may be ionised or non-ionised. The degree of ionisation of the ionisable groups will depend on various factors including the pKₐ of the ionisable group and the conditions to which the ionomer or polyacid are exposed (e.g. pH). The ionisable groups in an ionomer or polyacid are preferably all non-ionised (e.g. fully protonated, in the case of a carboxylic acid) or partly ionised (e.g. partly protonated, in the case of a carboxylic acid).

A polyacid is typically a homopolymer with a single repeating ionisable unit. Preferred polyacids include polyacrylic acid, polymethacrylic acid and polyethylene sulfonic acid. An ionomer is typically a co-polymer (e.g. a block co-polymer or a random co-polymer) comprising repeat units of both electrically neutral units and ionisable units. Preferred ionomers include poly(ethylene-co-acrylic acid) (pEAA) and poly(ethylene-co-methacrylic acid) (pEMA). The ionisable units are typically present in an ionomer in an amount of 30% by weight or less, more typically 20% by weight or less. The ionisable units are typically present in an ionomer in an amount of 1% by weight or more, more typically 5% by weight or more, still more typically 10% by weight or more. In some embodiments the ionisable units are present in an ionomer in an amount of 5 to 30 % by weight, e.g. 10 to 20 % by weight, e.g. 12 to 18 % by weight, 14 to 16 % by weight or 15 % by weight. In some embodiments, the ionisable units are typically present in an ionomer in an amount of up to 15 mol%. The weight percentage of the ionisable unit in an ionomer can be expressed as a number following the name of the ionomer. For example, p(EAA)15 indicates a poly(ethylene-co-acrylic acid) ionomer in which the acrylic acid unit is present in an amount of 15 wt %.

The amount of the low molecular weight additive (e.g. of Formula (I')) present in the self-healing polymer system is typically from 0.1 to 20 wt %, (e.g. from 0.1 to 10 wt %) relative to the weight of the ionomer or polyacid. Preferably, the amount of the low molecular weight additive (e.g. of Formula (I')) present in the polymer system is from 0.5 to 7.5 wt % (e.g. 0.75 to 6 wt %) relative to the weight of the ionomer or polyacid. In some embodiments, the low molecular weight additive (e.g. of Formula (I')) is present in the polymer system in an amount from 2.5 to 7.5 wt % (e.g. 3 to 7 wt %, 4 to 6 wt % or 5 wt %) relative to the weight of the ionomer or polyacid.

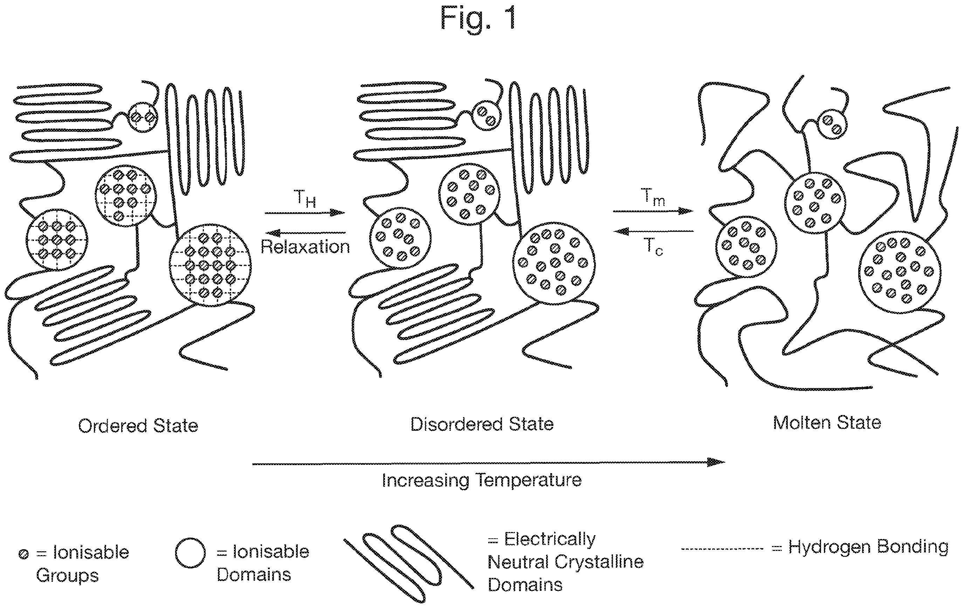

The mechanism of polymeric melt and supramolecular rearrangements in a simple ionomer or polyacid, such as poly(ethylene-co-acrylic acid), is depicted in Figure 1. Thus, Figure 1 shows disordering of ionisable domains at temperatures above T_{H}, and electrically neutral backbone melt at temperatures above Tₘ. T_{H} can therefore be defined as the temperature or range of temperatures at which non-covalent bonds (e.g. hydrogen bonds between ionisable groups of the ionomer or polyacid and/or pi-pi stacks between aromatic rings) are dissociated. Tₘ is the melting temperature of the self-healing polymer system containing a semicrystalline phase and T_{g} will be the glass transition temperature of the amorphous phase which may be modified by the presence of the supramolecular self-healing network. Tₘ is typically a solid to liquid transition in a conventional semicrystalline polymer, but in mixed phase systems it is the temperature above which the polymeric system no longer behaves as a solid but as a semi-solid or as an elastomer. Semi-crystalline polymer systems (e.g. some polyethylene-based ionomers) have a defined melting range of temperatures. In some embodiments, the polymer system of the present invention does not behave as a 'typical' thermoplastic and may have a non-linear plot of Log(aT) vs T-T_{g}, where T is the actual temperature of a matrix with a particular T_{g} value and aT is the rheometric shift factor. As healability is present in a polymer system when reversible non-covalent bonds that have been broken are able to reform below Tₘ, it can typically be achieved by controlling factors affecting dissociation and re-association of the non-covalent bonds so as to influence T_{H} and/or Tₘ, as well as by influencing the number and strength of intermolecular non-covalent interactions that are present in the polymer system.

In some embodiments of the self-healing polymer system of the present invention, the dissociation and re-association of intermolecular bonds can be influenced by the formation of a supramolecular non-covalently bonded network formed between molecules of the low molecular weight additive of Formula (I'), as well as the formation of non-covalent bonds formed between the low molecular weight additive of Formula (I') and the polymeric component. Factors affecting dissociation and re-association of the non-covalent bonds in a polymer system of this embodiment include the functionality present in the additive of Formula (I') and the amount of the additive of Formula (I'). For instance, in some embodiments, m in Formula (III) is 1 or more, and additional pi-pi stacking interactions are present in the polymer system. In some embodiments functionality present in the group represented by Formula (II) is capable of forming non-covalent bonds with groups present in the polymeric component.

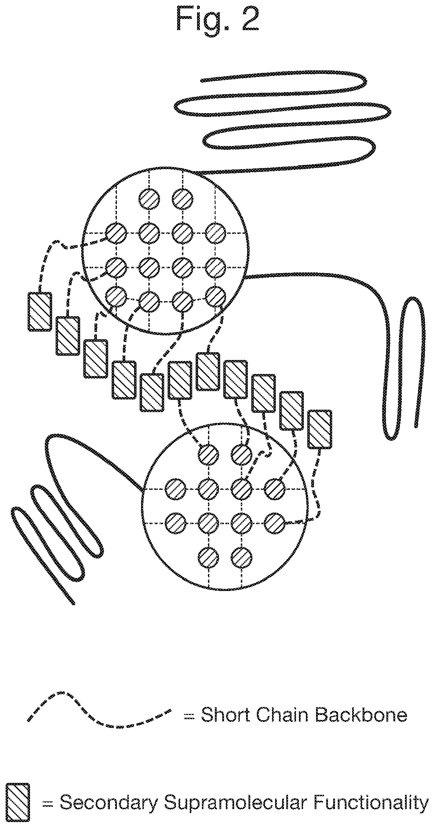

Figure 2 is a schematic depiction of a self-healing polymer system according to one embodiment of the invention comprising an ionomer or polyacid and a low molecular weight additive of formula (I'). In Figure 2, the group of Formula (II) interacts with the ionisable groups of the ionomer or polyacid to control T_{H}, and the groups of Formula (III), shown as secondary supermolecular functionality, interact with each other to provide secondary supramolecular interactions. These interactions directly affect physical properties and healability.

In some embodiments a low molecular weight additive of Formula **(I')** may promote healing by interacting with the ionisable groups in an ionomer or polyacid via non-covalent bonding. For example, these interactions may promote healing at lower temperatures. Accordingly, in some embodiments, the low molecular weight additive of Formula **(I')** is capable of forming a non-covalent bond (e.g. a hydrogen bond) with an ionisable group of the polymeric component (e.g. ionomer or polyacid). In embodiments when the polymeric component is an ionomer or polyacid and comprises a carboxylic acid group as the ionisable group, the low molecular weight additive of Formula **(I')** may be capable of forming a hydrogen bond with a carboxylic acid group. Preferred low molecular weight additives of Formula (I') which are capable of forming hydrogen bonds with a carboxylic acid group include those in which each R is independently -OH or -NH₂, particularly preferably those in which each R is -OH. In embodiments when the polymeric component comprises a system of conjugated pibonds (e.g. an aromatic ring), the low molecular weight additive of Formula **(I')** may be capable of forming pi-pi stacks with the polymeric component (e.g. with an aromatic ring of the polymeric component). Preferred low molecular weight additives of Formula (I') which are capable of forming pi-pi stacks with a polymeric component include those in which m is one or more. However any low molecular weight additive of Formula **(I')** may be capable of participating in pi-pi stacking, due to the presence of the phenyl ring in the m-nitrophenylurea moiety.

In some embodiments the low molecular weight additive of Formula (I') may increase the recovery of one or more mechanical property of the self-healing polymer system compared to the polymeric component (e.g. ionomer or polyacid) alone. For example, the polymer system may have improved recovery of tensile strength, storage modulus and/or Young's modulus compared to the ionomer or polyacid alone. Recovery of mechanical properties may for example be measured as that achieved under elevated temperature conditions (e.g. at 50 °C for 8 hours, or at 60 °C for 2 hours) or under elevated pressure conditions (e.g. at 0.98 MPa for 8 hours).

Typically, in such embodiments, the self-healing polymer system has improved recovery while at the same time providing at least one mechanical property (e.g. tensile strength, fracture stress, uniform strain, strain to fracture, storage modulus and/or Young's modulus) which, in absolute terms, is the same as or improved compared to the ionomer or polyacid alone. Methods of measuring tensile strength, fracture stress, uniform strain, strain to fracture, storage modulus and Young's modulus are well known in the art and include those used in Evaluation Example 1 below.

In some embodiments the addition of a low molecular weight additive of Formula (I') can preserve or even improve the elastic modulus and/or strength of the parent polymeric component. The low molecular weight additive of Formula (I') may strengthen the polymer by providing increased ordering within the polymeric system, for example by introducing a degree of crystallinity or increasing crystallinity in the polymer system compared to the ionomer or polyacid alone. Methods of measuring degree of crystallinity are well known in the art and include density measurement, differential scanning calorimetry (DSC), X-ray diffraction (XRD), infrared spectroscopy and solid state nuclear magnetic resonance (NMR). In some embodiments, the polymer system has a crystallinity of 1% or more (e.g. 10% or more, 20% or more, 30% or more, 40% or more, 50% or more). In some embodiments, the polymer system has a crystallinity of 60% or less (e.g. 50% or less, 40% or less, 30% or less, 20% % or less, 10% or less). In some embodiments, the self-healing polymer system has a crystallinity of 0% (i.e. an amorphous polymer system.

In some embodiments of the present invention, the self-healing polymer system comprises a polymeric component, and the polymeric component comprises an m-nitrophenylurea moiety. In such embodiments, the m-nitrophenylurea moiety is covalently bound to a polymeric component of the polymer system (e.g. an m-nitrophenylurea grafted polymer). In some embodiments the polymer system consists of an m-nitrophenylurea grafted polymer, for example of Formula (I) wherein X is a group comprising one or more sections of polymer chain, as described herein.

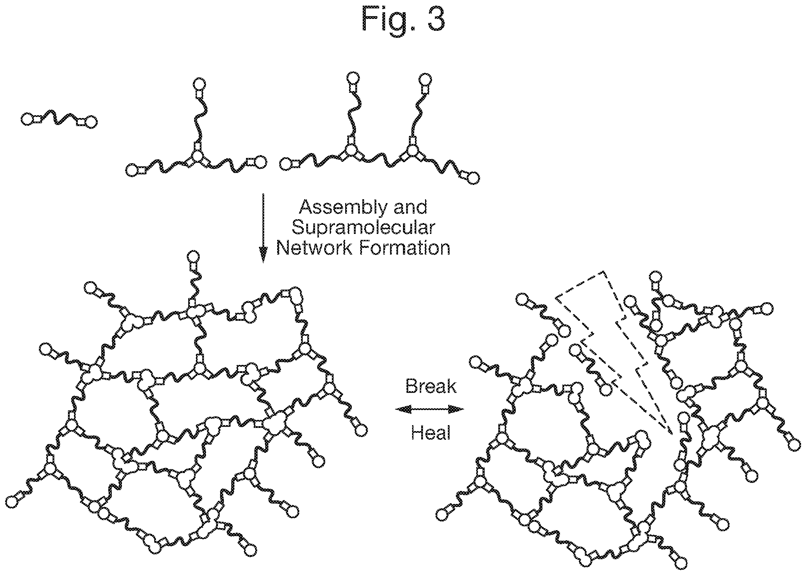

In embodiments where the m-nitrophenylurea moiety is covalently bound to a polymeric component, healability may arise through the formation of reversible hydrogen bonds between an m-nitrophenylurea moiety of one polymer chaincomprising molecule and an m-nitrophenylurea moiety of another polymer chaincomprising molecule. Polymer systems according to such embodiments may thereby comprise a supramolecular network of polymer-chain comprising molecules crosslinked by reversible intermolecular hydrogen bonds. When a polymer system according to such embodiments is damaged, the reversible hydrogen bonds are broken. However, the propensity of the m-nitrophenylurea to participate in intermolecular hydrogen bonding means that the polymer system can be healed by hydrogen bond reformation and reintroduction of non-covalent crosslinking in the polymer system. This mechanism is depicted schematically in Figure 3.

In some embodiments, the self-healing polymer system of the present invention comprises a component of Formula (I) wherein X is a group comprising one or more sections of polymer chain. In some such embodiments, the polymer system may consist of one or more components of Formula (I) wherein X is a group comprising one or more sections of polymer chain. In other such embodiments, the polymer system may comprise one or more components of Formula (I) wherein X is a group comprising one or more sections of polymer chain, and may further comprise one or more additional component. The one or more additional component may be a polymeric component (e.g. a polymeric component not comprising a group W, or a polymeric component not comprising an m-nitrophenylurea moiety), a non-polymeric component (e.g. a plasticiser), non-grafted and grafted polymer blends, or a mixture thereof.

When X is a group comprising one or more section of polymer chain, W is typically present at a terminus of the group X. When X is a group comprising one or more section of polymer chain, the one or more section of polymer chain typically does not comprise a m-nitrophenyl urea unit as a side-chain. In some embodiments of the invention in which X is a group comprising one or more section of polymer chain, the one or more section of polymer chain is obtainable by polymerisation of a monomer which does not comprise a m-nitrophenyl urea unit.

In embodiments where X is a group comprising one or more sections of polymer chain, the one or more sections of polymer chain maybe sections of any polymer chain, such as a polyolefin, polyacid, ionomer, polyalklene glycol, or mixture thereof. Typically, the one or more sections of polymer chain are sections of polyalkylene glycol, such as PEG, PPG, or a mixture thereof.

In some embodiments X is a group comprising one or more sections of polymer chain and further comprises one or more groups selected from -L-,-Y-, -D-, -CR¹<, -N< and - W wherein L, Y, D, W and R¹ are as defined herein in connection with Formulae (I), (II) and (III). When X comprises a group W, the group W is typically present at one or more terminus of group X (i.e. one or more end of group X not attached to the group W represented in Formula (I)).

When is X does not comprise a group -CR¹< or -N<, X is typically a linear group (i.e. comprising one or more sections of polymer chain in a linear structure. In some embodiments X is a linear group terminating in a group W (i.e. a group W is present at the end of group X not attached to the group W represented in Formula (I)). In such embodiments the component of Formula (I) may be referred to as a bis-m-nitrophenylurea component, and has a linear structure terminating at each end in a group W.

When X comprises a trivalent group -N< or -CR¹<, X is typically a branched group (i.e. a group comprising three or more sections of polymer chain in a branched structure). In some embodiments X is a branched group, with each branch terminating in a group W (i.e. a group W is present at each end of group X not attached to the group W represented in Formula (I)). In some such embodiments the component of Formula (I) may have a three, four or five armed structure, with each arm terminating in a group W, and may be referred to as a tris-, tetrakis-, or pentakis-m-nitrophenylurea component, respectively.

In some embodiments, of the self-healing polymer system of the present invention, X is a group comprising one or more sections of polymer chain and is represented by one of Formulae (IV) to (VII):

^{∗}-[pc]-Y-W **Formula (IV)**

^{∗}-[pc]-CR¹-(L-[pc]-W)₂ **Formula (V)**

^{∗}-[pc]-W **Formula (VI)**

^{*}-[pc]-Y-D-Y-L-N(Q)-[L-Y-D-Y-[pc]-Y-D-Y-L-N(Q)]ₚ-Q **Formula (VII)**

wherein, in Formulae (IV) to (VII), Q is a group -L-Y-D-Y-[pc]-W, each [pc] is a section of polymer chain, p is 0, 1, 2, 3 or 4, and Y, L, W, R¹, D and ^{∗} are as defined herein in connection with Formulae (II) and (III). Each Q, [pc], Y, L, W, R¹, D can be the same or different.

In Formulae (IV) to (VII), each [pc] maybe a section of any polymer chain, such as a polyolefin, polyacid, ionomer, polyalklene glycol, a copolymer, a terpolymer, or mixture thereof. Each [pc] is typically a section of polyalklene glycol, such as PEG, PPG, or a mixture thereof.

Each [pc] typically consists of 2 to 250 monomer units. Preferably, in a polymer system comprising a component of Formula (I) in which X is a group represented by one of Formulae (IV) to (VII), the average number of monomer units in each [pc] is 2 to 50, e.g. 5 to 50,5 to 40,5 to 10, 6 to 7, 7 to 15, 9 to 12, 10 to 11, 20 to 45, 25 to 40, 30 to 35, or 32 monomer units. In some embodiments, the group represented by Formula (IV), (V), (VI) or (VII) comprises a total of ten or more monomer units.

When X is represented by Formula (IV) or (VI), the component of Formula (I) is a bis-m-nitrophenylurea component. When X is represented by Formula (V), the component of Formula (I) is a tris-m-nitrophenylurea component. When X is represented by Formula (VII) and p is o, the component of Formula (I) is a tris-m-nitrophenylurea component. When X is represented by Formula (VII) and p is 1, the component of Formula (I) is a tetrakis-m-nitrophenylurea component. When X is represented by Formula (VII) and p is 2, the component of Formula (I) is a pentakis-m-nitrophenylurea component. Typically, p in Formula (VII) is o or 1. Preferably, q in Formula (VII) is o.

In some embodiments, the self-healing polymer system of the present invention is water-swellable.

For example, X maybe a group comprising one or more sections of polymer chain wherein one or more section of polymer chain is PEG. In some such embodiments, X is a group represented by Formula (IV), (V), (VI) or (VII), and one or more [pc] (e.g. each [pc]) in Formula (IV), (V), (VI) or (VII) is PEG. In certain embodiments, the polymer system of the present invention is water-swellable, and X is a group represented by Formula (IV) or (V) in which each [pc] is PEG.

In some embodiments, X is a group represented by Formula (VI) or (VII) and each [pc] is PPG.

Preferred components of Formula (I) in which X is a group represented by Formula (IV) include compound 2:

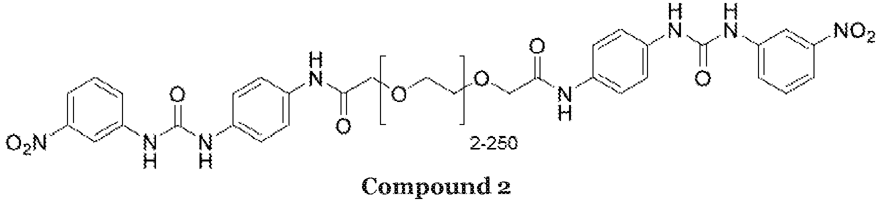

Preferably, in a self-healing polymer system comprising a component of Compound 2, the average number of monomer units in each section of polymer chain in a component of Compound 2 is 10 or 11.

Preferred components of Formula (I) in which X is a group represented by Formula (V) include compound 3:

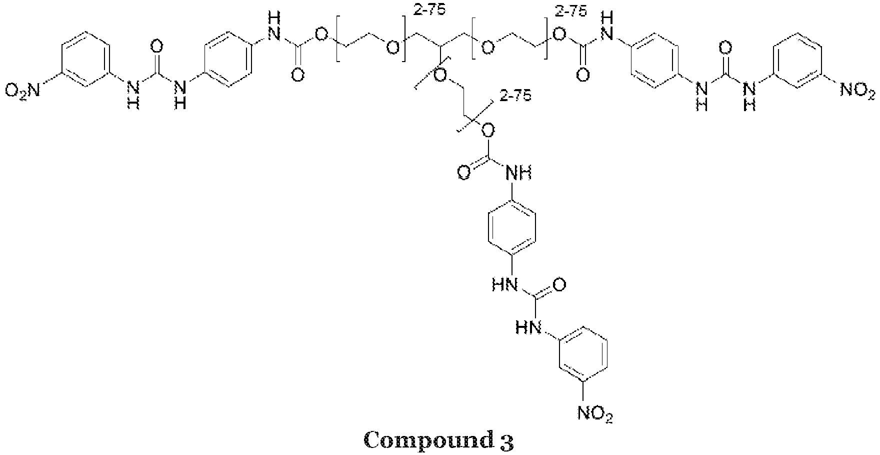

Preferably, in a self-healing polymer system comprising a component of Compound 3, the average number of monomer units in each section of polymer chain in a component of Compound 3 is 6 or 7.

Preferred components of Formula (I) in which X is a group represented by Formula (VI) include compound 4:

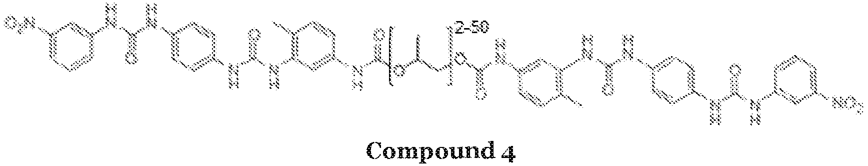

Preferred components of Formula (I) in which X is a group represented by Formula (VII) include compounds 5 and 6:

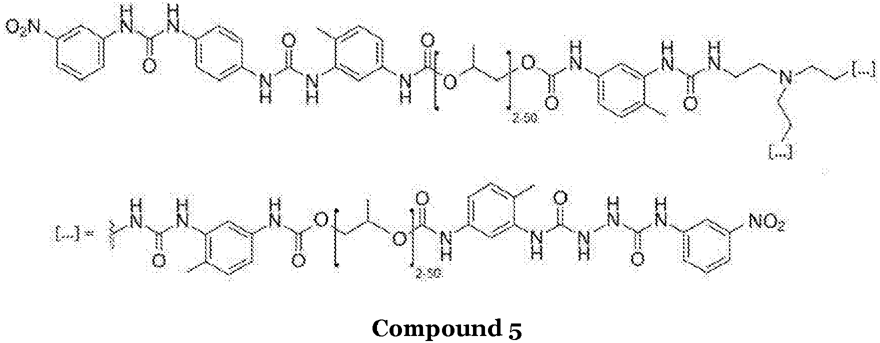

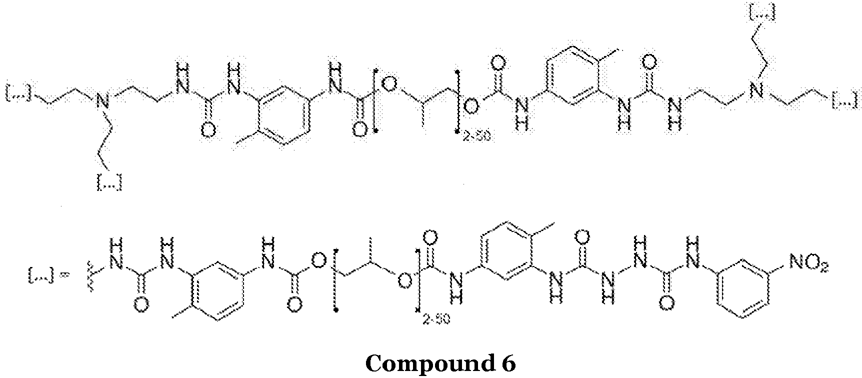

Preferably, in a self-healing polymer system comprising a component of Compound 4, 5 or 6, the average number of monomer units in each section of polymer chain in a component of Compound 4, 5 or 6 is 32.

Typical uses of the self-healing polymer system of the present invention include any application in which the combination of healability and robust mechanical properties is desirable. For instance, the polymer system of the present invention is particularly suitable for use as a polymeric protection system for protecting pipes and polymeric systems for protecting cables. In some such embodiments the polymer system can be used either internally (e.g. the insulation or fibre optic core), externally (e.g. the cable sheath), or both internally and externally. In some embodiments the polymer system may be used as a bulk material, layer or coating with other polymers through physical or reactive chemical blending.

A polymeric protection system for protecting a pipe (also referred to as a polymeric pipe protection system) maybe a polymeric material from which the pipe is made, or may be a protective polymeric coating around a pipe made from a different material such as a different polymeric material (e.g. HDPE, PP, polyethylene co-polymer, polypropylene co-polymer or PVC), a metallic material (e.g. steel, aluminium or copper), glass, or a composite material (e.g. fibreglass or concrete). Thus, in some embodiments a polymeric protection system for a pipe according to the present invention is a pipe consisting of or consisting essentially of a polymer system of the present invention. In other embodiments the polymeric protection system for a pipe according to the present invention is an inner or outer coating for a pipe comprising a material other than the self-healing polymer system of the present invention (e.g. for a pipe comprising a material selected from HDPE, PP, polyethylene co-polymer, polypropylene co-polymer, PVC, steel, aluminium, copper, fibreglass or concrete) wherein the outer coating comprises, consists essentially of or consists of the self-healing polymer system of the present invention. In some embodiments, the outer coating may further comprise another polymer or resin coating system.

The dimensions of a pipe used in connection with the polymeric protection system of the present invention are typically the same as or similar to the dimensions typical of consumer and industrial pipes (which will depend on its intended use). In embodiments where the polymeric protection system is an inner or outer coating comprising, consisting essentially of or consisting of the self-healing polymer system of the present invention, the thickness of the coating typically varies depending on the intended use of the pipe and an appropriate thickness can readily be determined by one of skill in the art. In some embodiments the thickness of the inner or outer coating may be 0.1mm or more, e.g. 0.1mm to 20mm. In some embodiments the pipe used in connection with the polymeric protection system of the present invention may have a wall thickness up to 10cm, or may have a wall thickness of more than 10cm.

One aspect of the present invention relates to a pipe incorporating the polymeric protection system of the present invention, as described above. A pipe according to this aspect of the present invention may for example be used as power piping (steam piping etc.), process piping, pipeline transportation systems for gases and/or liquids (e.g. methane, propane, hydrogen and gas mixtures for gas transport and distribution and water, liquid hydrocarbons and/or other liquids), refrigerant piping and/or heat transfer components, gas for energy transmission and/or distribution piping systems, building services piping, slurry transportation piping systems.

A polymeric protection system for protecting a cable (also referred to as a polymeric cable protection system) maybe the cable insulation, optic fibre core, sub-sheath layer, a cable jacket or part of a cable jacket system. Thus, in some embodiments, the polymeric cable protection system of the present invention is a cable jacket comprising the self-healing polymer system of the present invention. In some embodiments the polymeric cable protection system of the present invention is a cable jacket consisting of or consisting essentially of the polymer system of the present invention. In some embodiments the polymeric cable protection system of the present invention is a cable jacket having a plurality of layers (e.g. an inner layer, and outer layer and optionally one or more intermediate layers) in which one or more layers (e.g. 1, 2 or 3 layers) comprise the polymer system of the present invention.

In some embodiments, the polymeric cable protection system of the present invention is for electrically conducting cables (e.g. copper cabling or gold cabling). In other embodiments the polymeric cable protection system of the present invention is for optical cables (e.g. fibre-optic cables such as glass fibre-optic cables) or data communication cables with metallic or fibre optic cores. In other embodiments the polymeric cable protection system of the present invention is for structural cables (e.g. structural steel cables).

The dimensions of a cable used in connection with the polymeric protection system of the present invention are typically the same as or similar to the dimensions typical of a standard cable (which will depend on its intended use). The thickness of the cable insulation layer, sub-sheath layer or cable jacket layer comprising the polymer system of the present invention typically varies depending on the intended use of the cable and an appropriate thickness can readily be determined by one of skill in the art. In some embodiments thickness of the cable insulation layer, sub-sheath layer or cable jacket layer maybe 0.2mm or more, e.g. 0.2mm to 50mm.

Embodiments in which the self-healing polymer system of the present invention is water-swellable are particularly suitable for use in the polymeric protection system of the present invention in environments where the polymeric protection system is or maybe exposed to water.

One aspect of the present invention relates to a cable incorporating the polymeric protection system of the present invention, as described above. A cable of the present invention may be an electrically conducting cable, a fibre-optic cable or a structural cable, as described above.

Polymeric systems comprising an m-nitrophenylurea moiety can be obtained by analogy with known methods, and/or by analogy with the method used in the following examples and preparatory examples.

For instance, compounds of Formula (I') can be synthesised by analogy with the methods taught in Rodriguez et al., J. Med. Chem. 2008, 51, 909-923 and Denny et al., J. Med. Chem. 1979, 22, 134-150, and/or by analogy with the method used in Preparatory Example 1. The low molecular weight additive of Formula (I') can be blended with an ionomer or polyacid according to known polymer blending techniques such as melt phase blending and solution cast blending. Any suitable solvent can be used for solution cast blending, such as for example dimethylformamide (DMF).

Compounds of Formula (I) in which X is a group of Formula (IV) can be obtained by preparing a bis-aromatic nitro amine urea end cap by analogy with the procedure taught by Denny et al., J. Med. Chem. 1979, 22, 134-150, and subsequent addition to a suitably bis-functionalised polymer (e.g. a bis acyl chloride poly(ethylene glycol) bis(carboxymethyl) ether).

Compounds of Formula (I) in which X is a group of Formula (V) can be obtained by addition of phenyl isocyanate to a tris-hydroxyl capped tri-armed polymer (e.g. glycerol ethoylate, for embodiments where [pc] in Formula (V) is PEG), followed by reduction (e.g. via addition of palladium on activated carbon under a hydrogen atmosphere) to give an amine capped tri-armed material. A compound of Formula (I) in which X is a group of Formula (V) can be obtained by addition of 3-nitrophenyl isocyanate.

Compounds of Formula (I) in which X is a group of Formula (VI) and (VII) can be obtained by analogy with Example 2.

The following examples illustrate the present invention. However, they do not limit the invention in any way. Starting materials used in the examples and preparatory examples were obtained from Sigma Aldrich and used as supplied.

### Preparatory Example 1

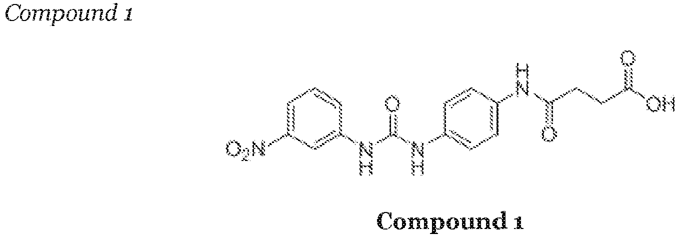

The aromatic amine 1-(4-aminophenyl)-3-(3-nitrophenyl)urea (0.1 g, 0.36 mmol) was dissolved in dry THF (50 mL). To the solution succinic anhydride was added (0.032g, 0.36 mmol) and the solution stirred under reflux (70 °C) for 24 hrs. The product was precipitated into HCl(aq) (1.0 M, 200 mL), The precipitate was collected and washed with H₂O (2 × 25 ml) to give 4-((4-(3-(3-nitrophenyl)ureido)phenyl)amino)-4-oxobutanoic acid (Compound 1) as a light brown powder (0.12 g, 86%).

IR (ATR) /cm⁻¹ 3362, 3275, 1696, 1671, 1655, 1599, 1554, 1515, 1403, 1348, 1255, 1202, 1173, 1047, 888, 839, 795, 722; ¹H NMR (MeOD) = 8.55 (s, 1H), 7.88 (m, 1H), 7.75 (m, 1H), 7.50 (m, 3H), 7.42 (m, 2H), 2.69 (m, 4H), ppm; ¹H NMR (DMSO-d6) = 9.89 (s, 1H), 9.39 (s, 1H), 8.97 (s, 1H), 8.58 (s, 1H), 7.80 (m, 1H), 7.73 (m, 1H), 7.51 (m, 3H) 7.39 (m, 2H) ppm; ¹³C NMR (DMSO-*d6*) = 176.5, 150.1, 130.9, 125.6, 121.9, 121.2, 117.9, 114.3, 79.5, 89.0, 32.3, 30.1 ppm; MS (ESI) m/z [M+Na⁺] calculated for C₁₇H₁₆O₆N₄Na = 395.0962, found 395.0959.

### Example 1

Poly(ethylene-co-acrylic acid) (15% wt. acrylic acid) (pEAA15) was blended with 5% Compound 1 (relative to the weight of the pEAA15) by solution cast blending in DMF followed by removal of solvent under high vacuum (24 hours at 80 °C).

### Example 2

Starting materials A B and C were used to prepare a healable polymer system, as follows. The average number of monomer units in C was 32.

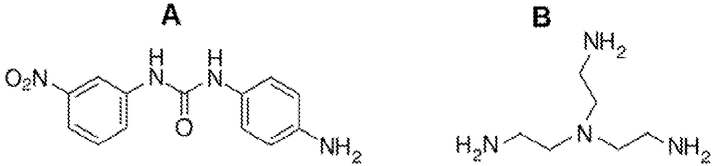

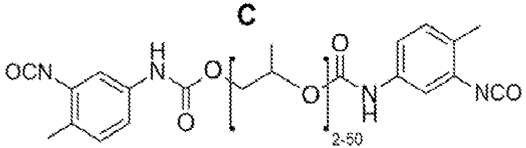

One molar equivalent of each of A and B were added to dry tetrahydrofuran, followed by addition of a further 1 molar equivalent of C. The reaction proceeded under inert conditions at 60 °C for 2 hours. The product was precipitated into water and washed with toluene to give a brown film that was able to be removed via filtration and dried/moulded under heat (60 °C, 2 hours) to give the polymer system of Example 2 as a non-tacky rubber-like brown film.

### Comparative Example 1

Poly(ethylene-co-acrylic acid) (15% wt. acrylic acid) (pEAA15) was used as a comparative example

### Evaluation Example 1

Mechanical analysis was obtained for the blends of Example 1 and Comparative Example 1. Studies were undertaken on a Varian tensometer on formed films (averaging 400 x 10 × 1 mm dimensions) at an extension rate of 1 mm(min)⁻¹. Each sample was run 5 times until curve repeatability was observed and the average taken. Results are presented in Table 1 below.

**Table 1**

| **Example** | ***Tensile* Strength (MPa)** | **Fracture Stress (MPa)** | **Uniform Strain (%)** | **Strain to Fracture (%)** | **Storage Modulus (MPa)** | **Young's Modulus (MPa)** |
|---|---|---|---|---|---|---|
| Example 1 | 2.66 | 1.95 | 9.21 | 17.14 | 204.21 | 1.25 |
| Comparative *Example* 1 | 2.20 | 1.95 | 7.30 | 9.84 | 128.59 | 0.81 |

It was found that blending Compound 1 with the polymer pEAA15 had significant impacts on the polymer's mechanical properties. Compound 1 was found to increase the material's tensile strength, modulus, uniform strain and strain to fracture significantly. The greater increase in uniform strain and strain to fracture as compared to fracture stress indicates that the introduction of a weaker secondary interaction has introduced a material more resilient to mechanical damage.

### Evaluation Example 2

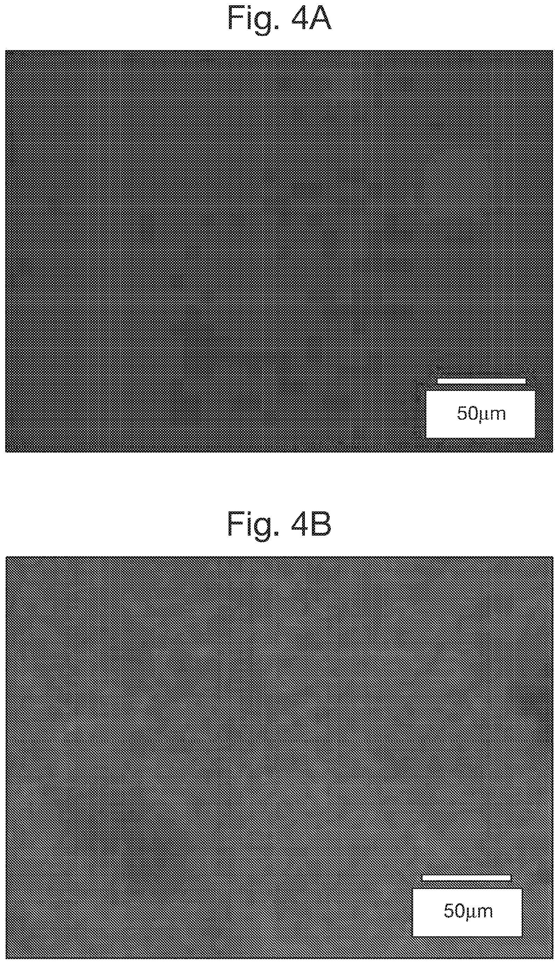

Polarising optical microscopic studies were undertaken on samples of Comparative Example 1 (Fig. 4A) and Example 1 (Fig. 4B) in order to assess the level of structural ordering present in pure pFAA15 when compared to system of the present invention. Comparative Example 1 showed no birefringence, suggesting a fully amorphous phase, yet when blended with compound 1, birefingence was induced. The presence of birefringence in system of the present invention demonstrates a level of ordering that could be conducive to the strengthening recorded in Evaluation Example 1.

### Evaluation Example 3

Dynamic scanning calorimetry was used to ascertain the blend's common transition points and ability to relax into a thermally favourable state. The common transition points were accessed via the third heat/cool cycle, removing any thermal history.

Example 1 demonstrated plasticization properties, lowering the T_{g} and Tₘ with respect to Comparative Example 1 (Table 2). This aligns with the observed increase in healability of the blends with respect to the original polymer.

**Table 2**

| ***Example*** | ***T_{g}*/*°C*** | ***Tₘ*/°*C*** | ***T_{c}*/°*C*** |
|---|---|---|---|
| Example 1 | -15.0 | 82.9 | 72.3 |
| Comp. *Example* **1** | -12.4 | 83.8 | 73.1 |

### Evaluation Example 4

Three studies were undertaken to ascertain levels of healing on films of Example 1 and Comparative Example 1. For thermally supported healing studies, films were cast and cut through before being place in contact as a butt join with no overlap. Thermal healing studies were carried out at 60 °C for 2 hours (Table 3) and 50 °C for 8 hours (Table 4). Temperatures were chosen to be at least 15 °C lower than any melting points recorded in either the repeated scans of thermal history scans carried out as part of Evaluation Example 3.

**Table 3**

| ***Example*** | ***Tensile Strength (MPa)*** | ***Fracture Stress (MPa)*** | ***Uniform Strain*** | **Strain *to Fracture*** | ***Storage Modulus (MPa)*** | ***Young's Modulus (MPa)*** |
|---|---|---|---|---|---|---|
| Example 1 | 0.88 | 0.88 | 0.02 | 0.02 | 6.89 | 0.25 |
| Comp. Example 1 | 0.12 | 0.12 | 0.02 | 0.02 | 0.19 | 0.05 |

**Table 4**

| ***Example*** | ***Tensile Strength (MPa)*** | ***Fracture Stress (MPa)*** | ***Uniform Strain*** | ***Strain to Fracture*** | ***Storage Modulus (MPa)*** | ***Young's Modulus (MPa)*** |
|---|---|---|---|---|---|---|
| Example 1 | 1.12 | 1.12 | 0.02 | 0.02 | 10.42 | 0.50 |
| Comp. Example 1 | 0.39 | 0.37 | 0.02 | 0.02 | 3.85 | 0.18 |

Non- thermal healing studies were conducted via pressure application on overlapped films. Films were prepared according to Example 1 and Comparative Example 1 and cut before being overlapped (1 x 10 mm) and subjected to a pressure of 0.98 MPa for 16 h at room temperature. Results are shown in Table 5.

**Table 5**

| ***Example*** | ***Tensile Strength (MPa)*** | ***Fracture Stress (MPa)*** | ***Uniform Strain*** | ***Strain to Fracture*** | ***Storage Modulus (MPa)*** | ***Young's Modulus (MPa)*** |
|---|---|---|---|---|---|---|
| Example 1 | 1.95 | 0.96 | 0.06 | 0.09 | 69.56 | 0.50 |
| Comp. Example 1 | 1.00 | 0.84 | 0.06 | 0.07 | 30.56 | 0.29 |

Percentage healing values of blends of Example 1 and Comparative Example 1 were calculated based on tensile strength, storage and Young's modulus recovery for each of the three healing studies with the reference values determined on undamaged materials. Results are shown in Table 6 below, in which a) is butt joint healing at 50 °C for 8 hours, b) is butt joint healing at 60 °C for 2 hours and c) is overlap healing under pressure (0.98 MPa) for 8 hours.

**Table 6**

| ***Example*** | ***Tensile Strength Recovery (%)*** | | | ***Storage Modulus Recovery (%)*** | | | ***Young's Modulus Recovery (%)*** | | |
|---|---|---|---|---|---|---|---|---|---|
| Example 1 Comp. Example 1 | **a** | **b** | **c** | **a** | **b** | **c** | **a** | **b** | **c** |
| | 33.1 | 42.1 | 73.3 | 3.4 | 5.1 | 34.1 | 20.0 | 40.0 | 40.0 |
| | 5.5 | 17.7 | 45.5 | 0.1 | 3.0 | 23.8 | 6.2 | 22.2 | 35.8 |

As can be seen from Table 6, Example 1 demonstrated improved tensile strength recovery in both the thermally supported healing tests and also demonstrated improved tensile strength recovery under the overlap pressure healing test.

Further, Example 1 demonstrated improved storage modulus recovery at 50 °C for 8 hours, and also improved storage modulus recovery at 60 °C for 2 hours, as well as under pressure.

Example 1 demonstrated improved Young's modulus recovery at 50 °C for 8 hours, and also demonstrated improved Young's modulus recovery at 60 °C for 2 hours, as well as under pressure.

### Evaluation Example 5

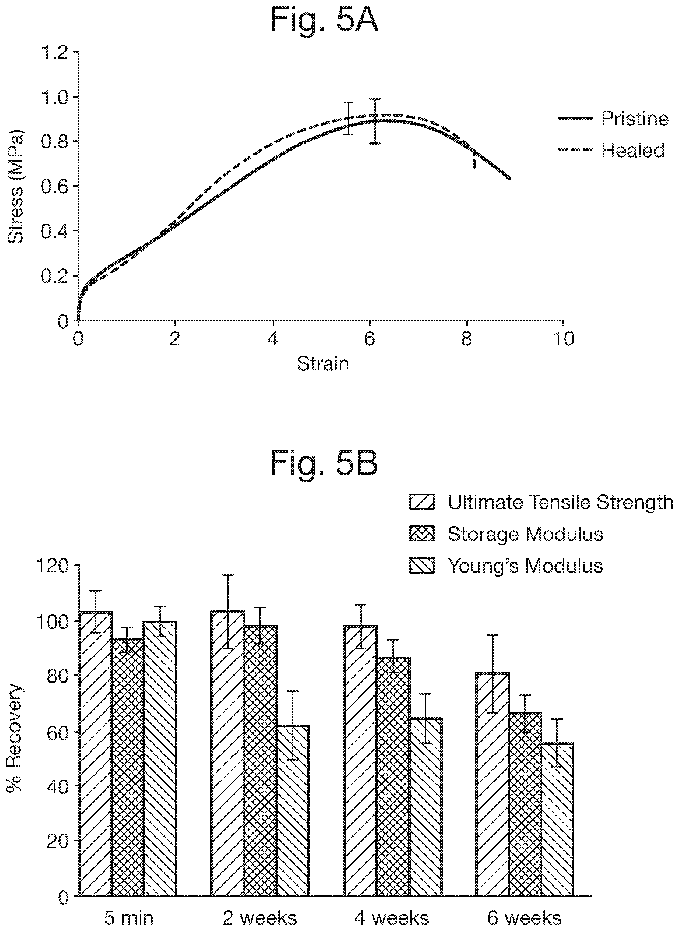

The film of Example 2 was cut and placed together by hand at room temperature. Contact was maintained for 2 minutes before the mechanical properties of the healed system were evaluated alongside a pristine undamaged film. Fig. 5A shows a stress/strain graph of the pristine and healed films. Fig 5B shows percentage healing efficiency (in regard to different mechanical properties) as a function of time spent apart after film separation. For the results shown in Figs. 5A and 5B the extension rate was 1 mm min⁻¹, film dimensions were 1 × 3 × 20 mm. Film length was measured to within ±0.5 mm and film depth and width were measured to within ±0.001 mm. In Figure 5B, results for each time period are given for, from left to right, ultimate tensile strength (determined as the highest stress achieved by samples), storage modulus (energy absorbed; determined by integration under the stress-strain curve), and Young's modulus.

### Summary

These results demonstrate that components comprising an m-nitrophenyl urea moiety are capable of improving healability and mechanical properties of polymeric systems. The foregoing discussion describes the present invention with reference to various embodiments which are purely exemplary and not intended to limit the invention as defined in the appended claims. Thus, modifications may be made to an embodiment disclosed above without departing from the scope of the invention as defined in the appended claims.

## Claims

1. A self-healing polymer system having a weight average molecular weight greater than 650 Da, wherein the polymer system comprises an *m*-nitrophenylurea moiety and wherein the weight average molecular weight is determined according to the method mentioned in the specification.

2. A self-healing polymer system according to claim 1 comprising a component represented by Formula (I):
W-X **Formula (I)**
wherein, in Formula (I), X is a group comprising one or more sections of polymer chain or a group represented by Formula (II):
^{∗}-CO-R **Formula (II)**
and W is a group represented by Formula (III): 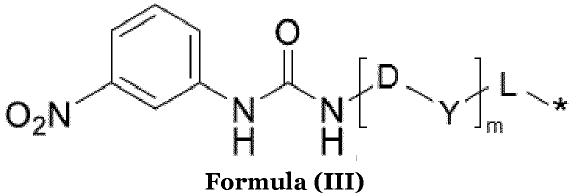 wherein, in formulae (II) and (III):
R is hydrogen, -OH, -O-[M]ₐ, -NH2, halo or a group selected from C₁-C₆ alkyloxy, C₂-C₆ alkenyloxy or C₂-C₆ alkynyloxy, wherein said group is unsubstituted or substituted with one or more substituent Z;
L is a single bond or a group selected from C₁-C₂₀ alkylene, C₂-C₂₀ alkenylene and C₂-C₂₀ alkynylene, wherein said group is unsubstituted or substituted with one or more substituent Z;
each Y is independently a group selected from -CO-NR¹-, -NR¹-CO-, -O-CO-NR¹-, -NR¹-CO-O-, -NR¹-CO-NR²-, -O-CO-, -CO-O, -O-CO-O-, -CO-, -O-, -S(O)ₒ₋₂-, -SO₂-NR¹-, and -NR¹-SO₂-;
R¹ and R² are each independently hydrogen, or a group selected from C₁-C₆ alkyl, C₂-C₆ alkenyl or C₂-C₆ alkynyl, wherein said group is unsubstituted or substituted with one or more substituent Z;
each D is independently a group selected from C₆-C₁₄ arylene and 5- to 14-membered heteroarylene, wherein said group is unsubstituted or substituted with one or more substituent Z¹;
m is o or an integer from 1 to 3;
each Z is independently halo, -OH, -NH2, cyano or nitro;
each Z¹ is independently Z or a group selected from C₁-C₆ alkyl, C₂-C₆ alkenyl or C₂-C₆ alkynyl, wherein said group is unsubstituted or substituted with one or more substituent Z;
M is a metal ion;
a is a molar ratio of M to the group of Formula (II) and is 0.5 or 1; and
^{∗}represents a point of attachment to the remainder of the component of Formula (I).

3. A self-healing polymer system according to claim 2, wherein:
R is -OH, -O-[M]ₐ, - or C₁-C₆ alkyloxy;
each L is independently a single bond or a C₁-C₆ alkylene group, wherein said group is unsubstituted or substituted with one two or three substituents Z;
each Y is independently selected from -CO-NR¹-, -NR¹-CO-, -O-CO-NR¹-, -NR¹-CO-O-, -NR¹-CO-NR²-, -O-CO-, -CO-O, -O-CO-O-, -CO- and -O-;
each R¹ and R² is independently hydrogen, or a C₁-C₆ alkyl group, wherein said group is unsubstituted or substituted with one two or three substituents Z;
each D is independently a group selected from phenylene and 6-membered heteroarylene, wherein said group is unsubstituted or substituted with one two or three substituents Z¹:
each m is independently 1 or 2;
each Z is independently F, Cl, -OH, or -NH2;
each Z¹ is independently F, Cl, -OH, -NH2 or C₁-C₆ alkyl; and
M is Na⁺, K⁺, Mg²⁺ or Ca²⁺.

4. A self-healing polymer system according to claim 3, wherein:
R is - OH, -O⁻[M]ₐ or methoxy;
each L is independently a single bond, or a group selected selected from methylene and ethylene, wherein said group is unsubstituted;
each Y is independently selected from -CO-NR¹-, -NR¹-CO-, -O-CO-NR¹-, -NR¹-CO-O-, -NR¹-CO-NR²- and -O-;
each R¹ and R² is independently hydrogen or a methyl group, wherein said group is unsubstituted;
each D is independently a phenylene group, wherein said group is unsubstituted or substituted by one methyl group;
M is Na⁺ or K⁺; and
a is 1.

5. A self-healing polymer system according to any one of claims 2 to 4, wherein the component of Formula (I) is a component represented by Formula (I'):
W-CO-R **Formula (I')**
wherein W and R are as defined in any one of claims 2 to 4,
and wherein the polymer system further comprises one or more components comprising a polymer chain, and wherein the one or more components comprising a polymer chain are not covalently bound to the component of Formula (I').

6. A self-healing polymer system according to claim 5, wherein the component of Formula (I') is present in an amount of from 0.1 to 10 wt %, relative to the total weight of the one or more components comprising a polymer chain.

7. A self-healing polymer system according to any one of claims 5 to 6 wherein the one or more components comprising a polymer chain comprise an ionomer or polyacid, preferably the ionomer or polyacid is poly(ethylene-co-acrylic acid)
, wherein acrylic acid monomer units are present in the poly(ethylene-co-acrylic acid) in an amount of from 5 to 30 wt %, relative to the overall weight of the poly(ethylene-co-acrylic acid).

8. A self-healing polymer system according to claim any one of claims 2 to 4, wherein X is a group comprising one or more sections of polymer chain and further comprises one or more groups selected from -L-, -Y-, -D-, -CR¹<, -N< and -W, wherein L, Y, D, W and R¹ are as defined in any one of claims 2 to 4, preferably
the group comprising one or more sections of polymer chain is represented by one of Formulae (IV) to (VII):
^{∗}-[pc]-Y-W **Formula (IV)**
^{∗}-[pc]-CR¹-(L-[pc]-W)₂ **Formula (V)**
^{∗}-[pc]-W **Formula (VI)**
^{∗}-[pc]-Y-D-Y-L-N(Q)-[L-Y-D-Y-[pc]-Y-D-Y-L-N(Q)]ₚ-Q **Formula (VII)**
wherein, in Formulae (IV) to (VII), Q is a group -L-Y-D-Y-[pc]-W, each [pc] is a section of polymer chain,, p is 0, 1, 2, 3 or 4, and Y, L, W, R¹, D and ^{∗} are as defined in any one of claims 2 to 4.

9. A self-healing polymer system according to claim 8, wherein each of the one or more sections of polymer chain consists of 2 to 50 monomer units.

10. A self-healing polymer system according to any one of claims 8 or 9, wherein the component comprising one or more sections of polymer chain comprises a total of ten or more monomer units.

11. A self-healing polymer system according to any one of claims 8 to 10, wherein one or more section of polymer chain is polyethylene glycol or polypropylene glycol and wherein the self-healing polymer system is water-swellable.

12. A self-healing polymer system according to claim 2, wherein the component represented by Formula (I) is selected from: 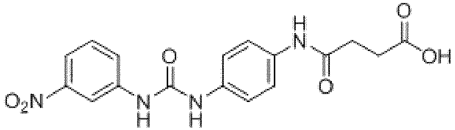 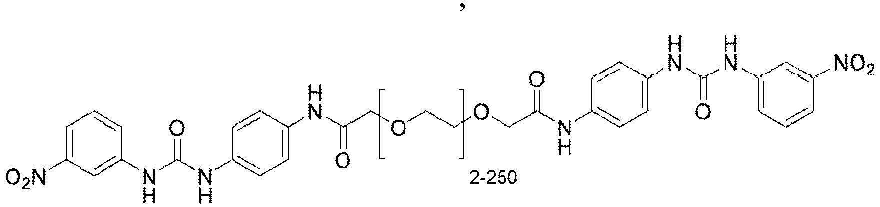 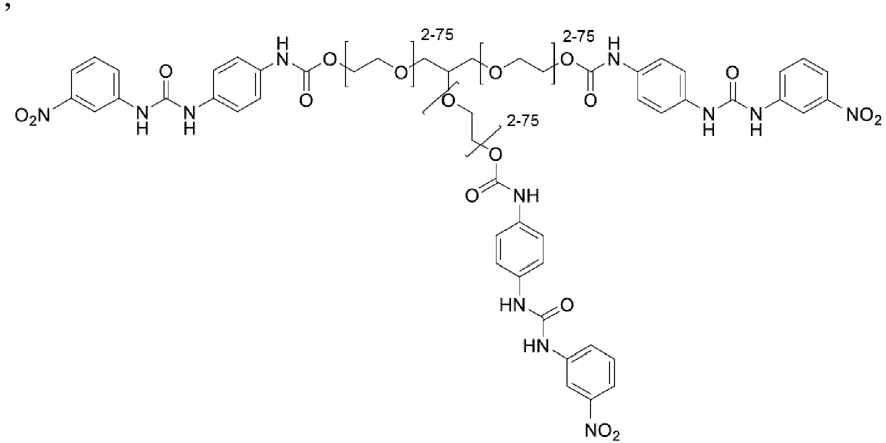 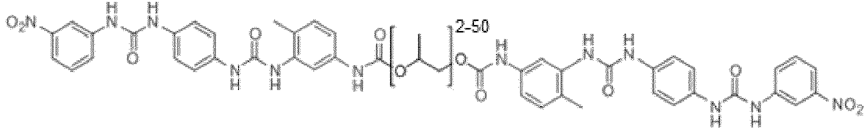 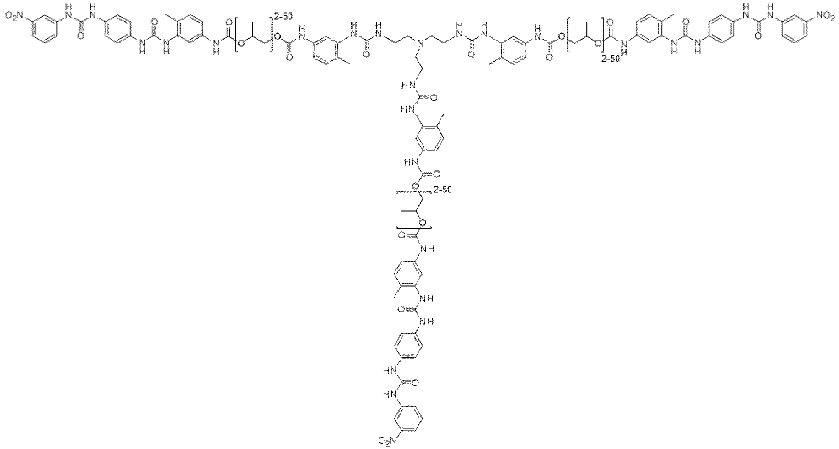 and

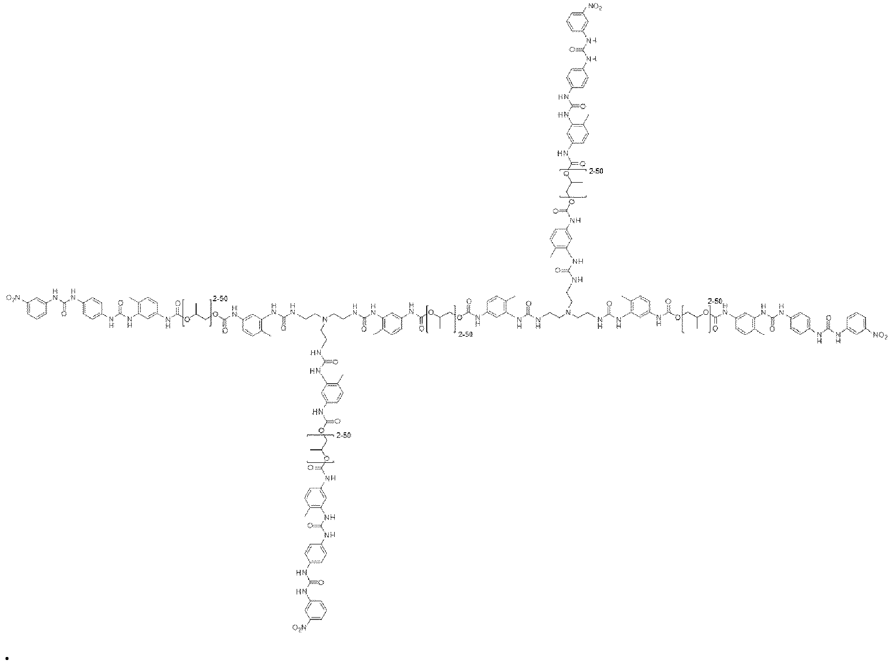

13. A self-healing polymer system according to any one of the preceding claims, in which *m*-nitrophenylurea moieties are bound to each other by non-covalent bonds to form a supramolecular network.

14. A self-healing polymeric protection system for protecting a pipe or a cable comprising a polymer system as defined in any one of claims 1 to 13.

15. A pipe or cable comprising a self-healing polymeric protection system as defined in claim 14.

## Patentansprüche

1. Selbstheilendes Polymersystem, das ein Gewichtsmittel des Molekulargewichts von mehr als 650 Da aufweist, wobei das Polymersystem einen *m*-Nitrophenylharnstoffteil umfasst und wobei das Gewichtsmittel des Molekulargewichts gemäß dem Verfahren bestimmt wird, das in der Patentschrift genannt ist.

2. Selbstheilendes Polymersystem nach Anspruch 1, umfassend eine Komponente dargestellt durch Formel (I):
W-X **Formel (I)**
wobei in Formel (I) X eine Gruppe ist, die einen oder mehrere Abschnitte einer Polymerkette umfasst, oder eine Gruppe dargestellt durch Formel (II):
^{∗}-CO-R **Formel (II)**
und W eine Gruppe dargestellt durch Formel (III) ist: 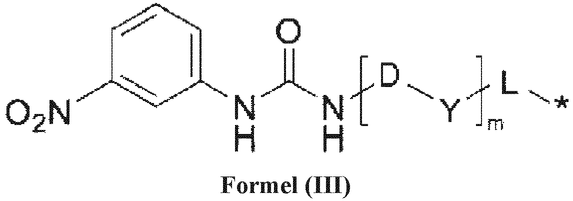 wobei in Formel (II) und (III):
R Wasserstoff, -OH, -O⁻[M]ₐ, -NH₂, Halogen oder eine Gruppe ausgewählt aus C₁-C₆Alkyloxy, C₂-C₆Alkenyloxy oder C₂-C₆Alkynyloxy ist, wobei die Gruppe nicht substituiert oder substituiert mit einem oder mehreren Substituenten Z ist;
L eine Einfachbindung oder eine Gruppe ausgewählt aus C₁-C₂₀Alkylen, C₂-C₂₀Alkenylen und C₂-C₂₀Alkynylen ist, wobei die Gruppe nicht substituiert oder substituiert mit einem oder mehreren Substituenten Z ist;
jedes Y unabhängig eine Gruppe ausgewählt aus -CO-NR¹-, -NR¹-CO-, -O-CO-NR¹-, -NR¹-CO-O-, -NR¹-CO-NR²-, -O-CO-, -CO-O, -O-CO-O-, -CO-, -O-, -S(O)₀-₂-, -SO₂-NR¹- und -NR¹-SO₂-ist;
R¹ und R² jeweils unabhängig Wasserstoff oder eine Gruppe ausgewählt aus C₁-C₆Alkyl, C₂-C₆Alkenyl oder C₂-C₆Alkynyl sind, wobei die Gruppe nicht substituiert oder substituiert mit einem oder mehreren Substituenten Z ist;
jedes D unabhängig eine Gruppe ausgewählt aus C₆-C₁₄Arylen und 5- bis 14-gliedrigem Heteroarylen ist, wobei die Gruppe nicht substituiert oder substituiert mit einem oder mehreren Substituenten Z¹ ist;
m 0 oder eine ganze Zahl von 1 bis 3 ist;
jedes Z unabhängig Halogen, -OH, -NH₂, Cyano oder Nitro ist;
jedes Z¹ unabhängig Z oder eine Gruppe ausgewählt aus C₁-C₆Alkyl, C₂-C₆Alkenyl oder C₂-C₆Alkynyl ist, wobei die Gruppe nicht substituiert oder substituiert mit einem oder mehreren Substituenten Z ist;
M ein Metallion ist;
a ein Molverhältnis von M zu der Gruppe der Formel (II) ist und 0,5 oder 1 ist; und
^{∗} einen Bindungspunkt an den Rest der Komponente der Formel (I) darstellt.

3. Selbstheilendes Polymersystem nach Anspruch 2, wobei:
R -OH, -O⁻[M]ₐ, - oder C₁-C₆Alkyloxy ist;
jedes L unabhängig eine Einfachbindung oder eine C₁-C₆Alkylengruppe ist, wobei die Gruppe nicht substituiert oder substituiert mit einem, zwei oder drei Substituenten Z ist;
jedes Y unabhängig ausgewählt ist aus -CO-NR¹-, -NR¹-CO-, -O-CO-NR¹-, -NR¹-CO-O-, -NR¹-CO-NR²-, -O-CO-, -CO-O, -O-CO-O-, -CO- und -O-;
jedes R¹ und R² unabhängig Wasserstoff oder eine C₁-C₆Alkylgruppe ist, wobei die Gruppe nicht substituiert oder substituiert mit einem, zwei oder drei Substituenten Z ist;
jedes D unabhängig eine Gruppe ausgewählt aus Phenylen und 6-gliedrigem Heteroarylen ist, wobei die Gruppe nicht substituiert oder substituiert mit einem, zwei oder drei Substituenten Z¹ ist:
jedes m unabhängig 1 oder 2 ist;
jedes Z unabhängig F, Cl, -OH oder -NH₂ ist;
jedes Z¹ unabhängig F, Cl, -OH, -NH₂ oder C₁-C₆Alkyl ist; und
M Na⁺, K⁺, Mg²⁺ oder Ca²⁺ ist.

4. Selbstheilendes Polymersystem nach Anspruch 3, wobei:
R - OH, -O-[M]ₐ oder Methoxy ist;
jedes L unabhängig eine Einfachbindung oder eine Gruppe ausgewählt ausgewählt aus Methylen und Ethylen ist, wobei die Gruppe nicht substituiert ist;
jedes Y unabhängig ausgewählt aus -CO-NR¹-, -NR¹-CO-, -O-CO-NR¹-, -NR¹-CO-O-, -NR¹-CO-NR²- und -O- ist;
jedes R¹ und R² unabhängig Wasserstoff oder eine Methylgruppe ist, wobei die Gruppe nicht substituiert ist;
jedes D unabhängig eine Phenylengruppe ist, wobei die Gruppe nicht substituiert oder substituiert durch eine Methylgruppe ist;
M Na⁺ oder K⁺ ist; und
a 1 ist.

5. Selbstheilendes Polymersystem nach einem der Ansprüche 2 bis 4, wobei die Komponente der Formel (I) eine Komponente dargestellt durch Formel (I') ist:
W-CO-R **Formel (I')**
wobei W und R wie in einem der Ansprüche 2 bis 4 definiert sind,
und wobei das Polymersystem ferner eine oder mehrere Komponenten umfasst, die eine Polymerkette umfassen, und wobei die eine oder mehreren Komponenten, die eine Polymerkette umfassen, nicht kovalent an die Komponente der Formel (I') gebunden sind.

6. Selbstheilendes Polymersystem nach Anspruch 5, wobei die Komponente der Formel (I') in einer Menge von 0,1 bis 10 Gew.-% relativ zu dem Gesamtgewicht der einen oder mehreren Komponenten vorhanden ist, die eine Polymerkette umfassen.

7. Selbstheilendes Polymersystem nach einem der Ansprüche 5 bis 6, wobei die eine oder mehreren Komponenten, die eine Polymerkette umfassen, ein Ionomer oder eine Polysäure umfassen, wobei vorzugsweise das Ionomer oder die Polysäure Poly(ethylen-co-Acrylsäure) ist, wobei Acrylsäuremonomereinheiten in der Poly(ethylen-co-Acrylsäure) in einer Menge von 5 bis 30 Gew.-% relativ zu dem Gesamtgewicht der Poly(ethylen-co-Acrylsäure) vorhanden sind.

8. Selbstheilendes Polymersystem nach einem der Ansprüche 2 bis 4, wobei X eine Gruppe ist, die einen oder mehrere Abschnitte einer Polymerkette umfasst, und ferner eine oder mehrere Gruppen ausgewählt aus -L-, -Y-, -D-, -CR¹<, -N< und -W umfasst, wobei L, Y, D, W und R¹ wie in einem der Ansprüche 2 bis 4 definiert sind, vorzugsweise die Gruppe, die einen oder mehrere Abschnitte einer Polymerkette umfasst, durch eine der Formeln (IV) bis (VII) dargestellt ist:
^{∗}-[pc]-Y-W **Formel (IV)**
"-[pc]-CR¹(L-[pc]-W)₂ **Formel (V)**
^{∗}-[pc]-W **Formel (VI)**
^{∗}-[pc]-Y-D-Y-L-N(Q)-[L-Y-D-Y-[pc]-Y-D-Y-L-N(Q)]ₚ-Q **Formel (VII)**
wobei in den Formeln (IV) bis (VII) Q eine Gruppe -L-Y-D-Y-[pc]-W ist, jedes [pc] ein Abschnitt einer Polymerkette ist, p 0, 1, 2, 3 oder 4 ist, und Y, L, W, R¹, D und ^{∗} wie in einem der Ansprüche 2 bis 4 definiert sind.

9. Selbstheilendes Polymersystem nach Anspruch 8, wobei jeder von dem einen oder den mehreren Abschnitten einer Polymerkette aus 2 bis 50 Monomereinheiten besteht.

10. Selbstheilendes Polymersystem nach einem der Ansprüche 8 oder 9, wobei die Komponente, die einen oder mehrere Abschnitte einer Polymerkette umfasst, insgesamt zehn oder mehr Monomereinheiten umfasst.

11. Selbstheilendes Polymersystem nach einem der Ansprüche 8 bis 10, wobei ein oder mehrere Abschnitte einer Polymerkette Polyethylenglykol oder Polypropylenglykol sind und wobei das selbstheilende Polymersystem wasserquellbar ist.

12. Selbstheilendes Polymersystem nach Anspruch 2, wobei die Komponente dargestellt durch Formel (I) ausgewählt ist aus: 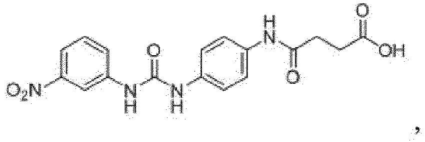 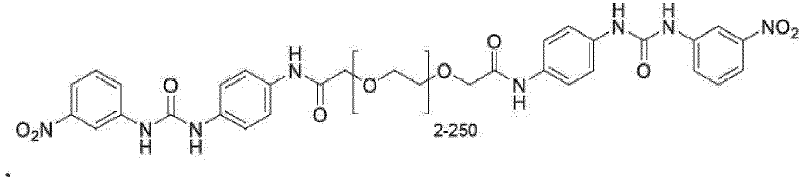 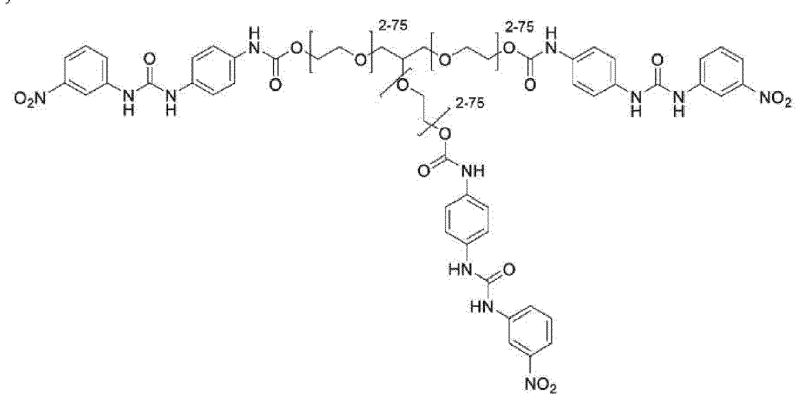 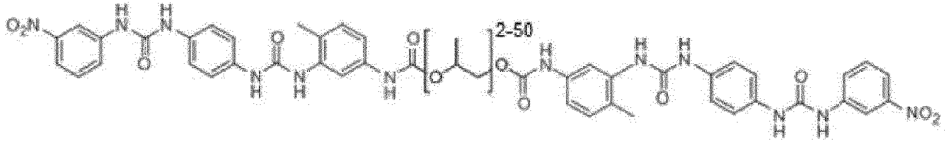 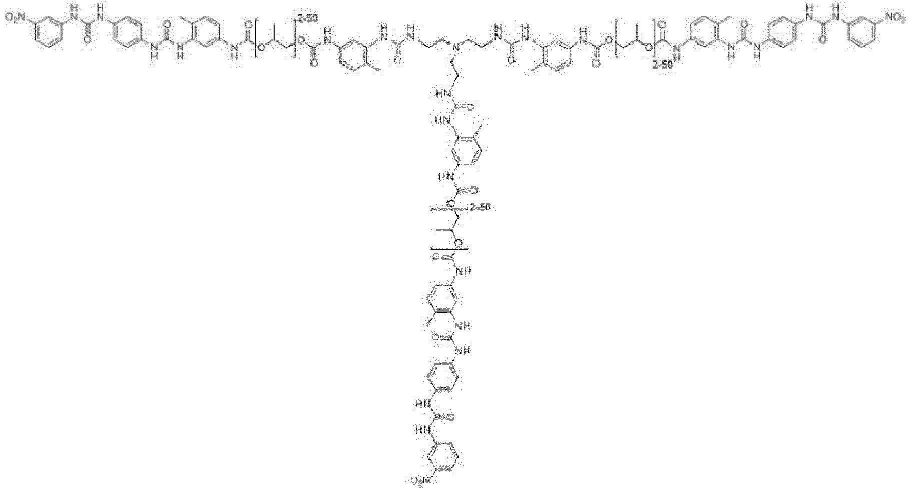 und

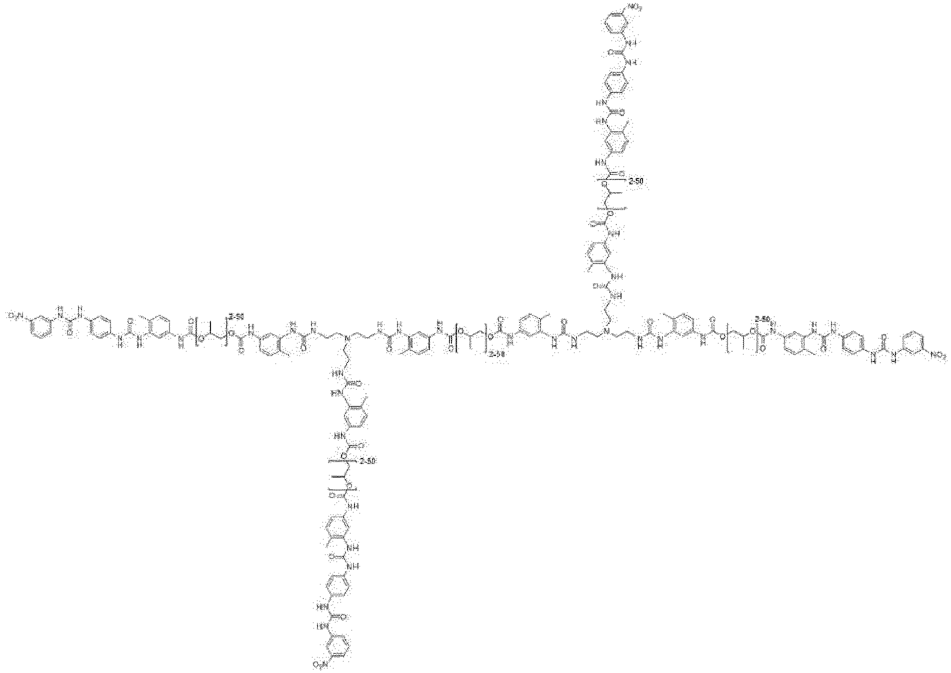

13. Selbstheilendes Polymersystem nach einem der vorhergehenden Ansprüche, wobei *m-*Nitrophenylharnstoffteile durch nicht-kovalente Bindungen aneinander gebunden sind, um ein supramolekulares Netzwerk zu bilden.

14. Selbstheilendes polymeres Schutzsystem zum Schützen eines Rohres oder eines Kabels, umfassend ein Polymersystem wie in einem der Ansprüche 1 bis 13 definiert.

15. Rohr oder Kabel, umfassend ein selbstheilendes polymeres Schutzsystem wie in Anspruch 14 definiert.

## Revendications

1. Système polymère auto-réparant présentant un poids moléculaire moyen en poids supérieur à 650 Da, ledit système polymère comprenant un groupement *m*-nitrophénylurée et ledit poids moléculaire moyen en poids étant déterminé selon la méthode mentionnée dans la description.

2. Système polymère auto-réparant selon la revendication 1 comprenant un composant représenté par la formule (I) :
W-X **Formule (I)**
dans laquelle, dans la formule (I), X représente un groupe comprenant une ou plusieurs sections d'une chaîne polymère ou un groupe représenté par la formule (II) :
^{∗}-CO-R **Formule (II)**
et W est un groupe représenté par la formule (III) : 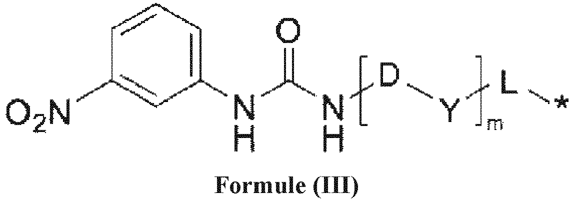 dans lesquelles, dans les formules (II) et (III) :
R représente un atome d'hydrogène, un groupe -OH, -O-[M]ₐ, -NH₂, halogéno ou un groupe choisi parmi un groupe C₁-C₆ alkyloxy, C₂-C₆ alcényloxy ou C₂-C₆ alcynyloxy, ledit groupe étant non substitué ou substitué par un ou plusieurs substituants Z ;
L représente une liaison simple ou un groupe choisi parmi un groupe C₁-C₂₀ alkylène, C₂-C₂₀ alcénylène et C₂-C₂₀ alcynylène, ledit groupe étant non substitué ou substitué par un ou plusieurs substituants Z ;
chaque Y représente indépendamment un groupe choisi parmi les groupes -CO-NR¹-, - NR¹-CO-, -O-CO-NR¹-, -NR¹-CO-O-, -NR¹-CO-NR²-, -O-CO-, -CO-O, -O-CO-O-, -CO-, -O-, - S(O)₀₋₂-, -SO₂-NR¹- et -NR¹-SO₂- ;
R¹ et R² représentent chacun indépendamment un atome d'hydrogène ou un groupe choisi parmi un groupe C₁-C₆ alkyle, C₂-C₆ alcényle ou C₂-C₆ alcynyle, ledit groupe étant non substitué ou substitué par un ou plusieurs substituants Z ;
chaque D représente indépendamment un groupe choisi parmi les groupes C₆-C₁₄ arylène et hétéroarylène de 5 à 14 chaînons, ledit groupe étant non substitué ou substitué par un ou plusieurs substituants Z¹ ;
m vaut 0 ou représente un entier de 1 à 3 ;
chaque Z représente indépendamment un groupe halogéno, -OH, -NH₂, cyano ou nitro ;
chaque Z¹ est indépendamment Z ou représente un groupe choisi parmi un groupe C₁-C₆ alkyle, C₂-C₆ alcényle ou C₂-C₆ alcynyle, ledit groupe étant non substitué ou substitué par un ou plusieurs substituants Z ;
M représente un ion métallique ;
a représente le rapport molaire de M au groupe de formule (II) et vaut 0,5 ou 1 ; et
^{∗} représente un point de fixation au reste du composant de formule (I).

3. Système polymère auto-réparant selon la revendication 2 :
R représentant un groupe -OH, -O⁻[M]ₐ, - ou C₁-C₆ alkyloxy ;
chaque L représentant indépendamment une liaison simple ou un groupe C₁-C₆ alkylène, ledit groupe étant non substitué ou substitué par un, deux ou trois substituants Z ;
chaque Y étant indépendamment choisi parmi les groupes -CO-NR¹-, -NR¹-CO-, -O-CO-NR¹-, -NR¹CO-O-, -NR¹-CO-NR²-, -O-CO-, -CO-O, -O-CO-O-, -CO- et -O- ;
chaque R¹ et R² représentant indépendamment un atome d'hydrogène ou un groupe C₁-C₆ alkyle, ledit groupe étant non substitué ou substitué par un, deux ou trois substituants Z ;
chaque D représentant indépendamment un groupe choisi parmi les groupes phénylène et hétéroarylène à 6 chaînons, ledit groupe étant non substitué ou substitué par un, deux ou trois substituants Z¹ ;
chaque m valant indépendamment 1 ou 2 ;
chaque Z représentant indépendamment un atome F, Cl, un groupe -OH ou -NH₂ ;
chaque Z¹ représentant indépendamment un atome F, Cl, un groupe -OH, -NH₂ ou C₁-C₆ alkyle ; et
M représentant Na⁺, K⁺, Mg²⁺ ou Ca²⁺.

4. Système polymère auto-réparant selon la revendication 3 :
R représentant un groupe -OH, -O⁻[M]ₐ ou méthoxy ;
chaque L représentant indépendamment une liaison simple ou un groupe choisi choisi parmi les groupes méthylène et éthylène, ledit groupe étant non substitué ;
chaque Y étant indépendamment choisi parmi les groupes -CO-NR¹-, -NR¹-CO-, -O-CO-NR¹-, -NR¹-CO-O-, -NR¹-CO-NR²- et -O- ;
chaque R¹ et R² représentant indépendamment un atome d'hydrogène ou un groupe méthyle, ledit groupe étant non substitué ;
chaque D représentant indépendamment un groupe phénylène, ledit groupe étant non substitué ou substitué par un groupe méthyle ;
M représentant Na⁺ ou K⁺; et
a valant 1.

5. Système polymère auto-réparant selon l'une quelconque des revendications 2 à 4, ledit composant de formule (I) étant un composant représenté par la formule (I') :
W-CO-R **Formule (I')**
dans laquelle W et R sont tels que définis dans l'une quelconque des revendications 2 à 4,
et ledit système polymère comprenant en outre un ou plusieurs composants comprenant une chaîne polymère, et lesdits un ou plusieurs composants comprenant une chaîne polymère n'étant pas liés par covalence au composant de formule (I').

6. Système polymère auto-réparant selon la revendication 5, ledit composant de formule (I') étant présent en une quantité allant de 0,1 à 10 % en poids par rapport au poids total desdits un ou plusieurs composants comprenant une chaîne polymère.

7. Système polymère auto-réparant selon l'une quelconque des revendications 5 à 6, lesdits un ou plusieurs composants comprenant une chaîne polymère comprenant un ionomère ou un polyacide, de préférence le ionomère ou le polyacide étant le poly(éthylène-co-acide acrylique),
les motifs monomères d'acide acrylique étant présents dans le poly(éthylène-co-acide acrylique) en une quantité allant de 5 à 30 % en poids par rapport au poids total du poly(éthylène-co-acide acrylique).

8. Système polymère auto-réparant selon l'une quelconque des revendications 2 à 4, X représentant un groupe comprenant une ou plusieurs sections d'une chaîne polymère et comprenant en outre un ou plusieurs groupes choisis parmi les groupes -L-, -Y-, -D-, -CR¹<, -N< et -W, lesdits groupes L, Y, D, W et R¹ étant tels que définis dans l'une quelconque des revendications 2 à 4, de préférence le groupe comprenant une ou plusieurs sections d'une chaîne polymère étant représenté par l'une des formules (IV) à (VII) :
^{∗}-[pc]-Y-W **Formule (IV)**
^{∗}-[pc]-CR¹(L-[pc]-W)₂ **Formule (V)**
^{∗}-[pc]-W **Formule (VI)**
^{∗}-[pc]-Y-D-Y-L-N(Q)-[L-Y-D-Y-[pc]-Y-D-Y-L-N(Q)]ₚ-Q **Formule (VII)**
dans lesquelles, dans les formules (IV) à (VII), Q représente un groupe -L-Y-D-Y-[pc]-W, chaque [pc] représente une section d'une chaîne polymère, p vaut 0, 1, 2, 3 ou 4, et Y, L, W, R¹, D et ^{∗} sont tels que définis dans l'une quelconque des revendications 2 à 4.

9. Système polymère auto-réparant selon la revendication 8, chacune desdites une ou plusieurs sections d'une chaîne polymère étant constituée de 2 à 50 motifs monomères.

10. Système polymère auto-réparant selon l'une quelconque des revendications 8 ou 9, ledit composant comprenant une ou plusieurs sections d'une chaîne polymère comprenant un total de dix motifs monomères ou plus.

11. Système polymère auto-réparant selon l'une quelconque des revendications 8 à 10, one ou plusieurs sections d'une chaîne polymère étant du polyéthylène glycol ou du polypropylène glycol et ledit système polymère auto-réparant étant gonflable à l'eau.

12. Système polymère auto-réparant selon la revendication 2, ledit composant représenté par la formule (I) étant choisi parmi : 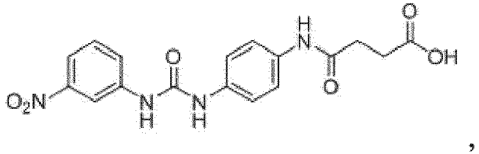 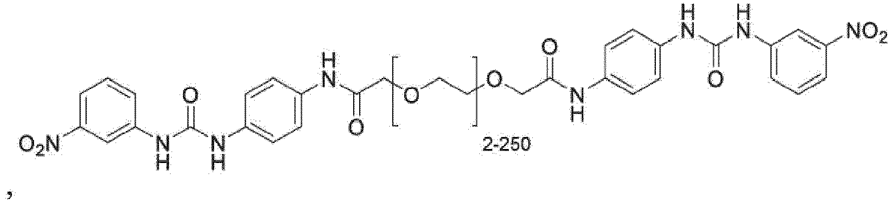 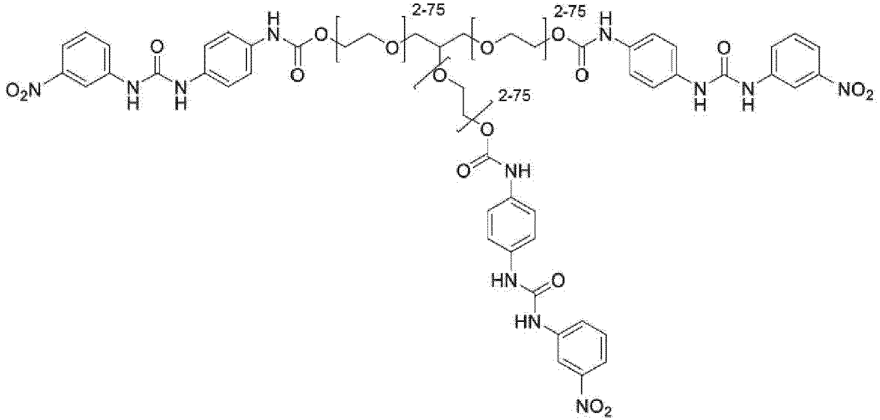 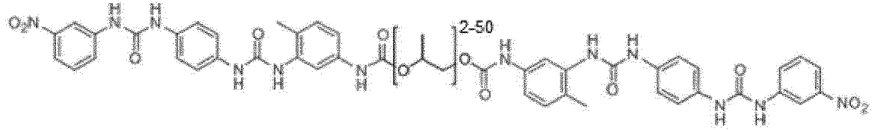 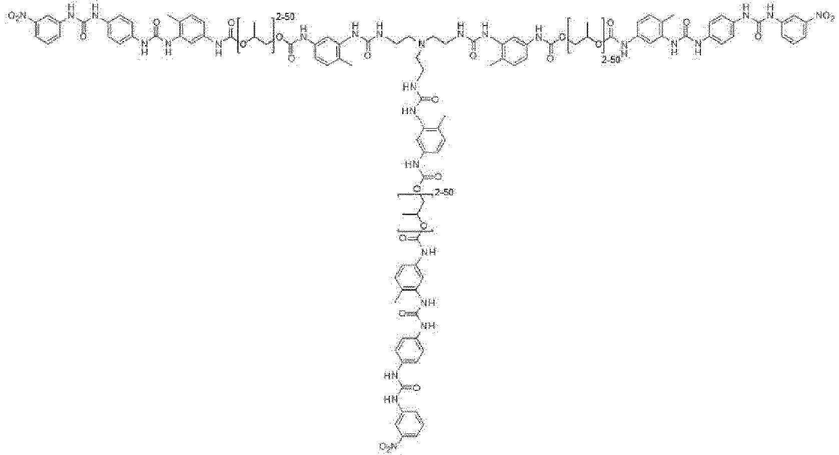 et

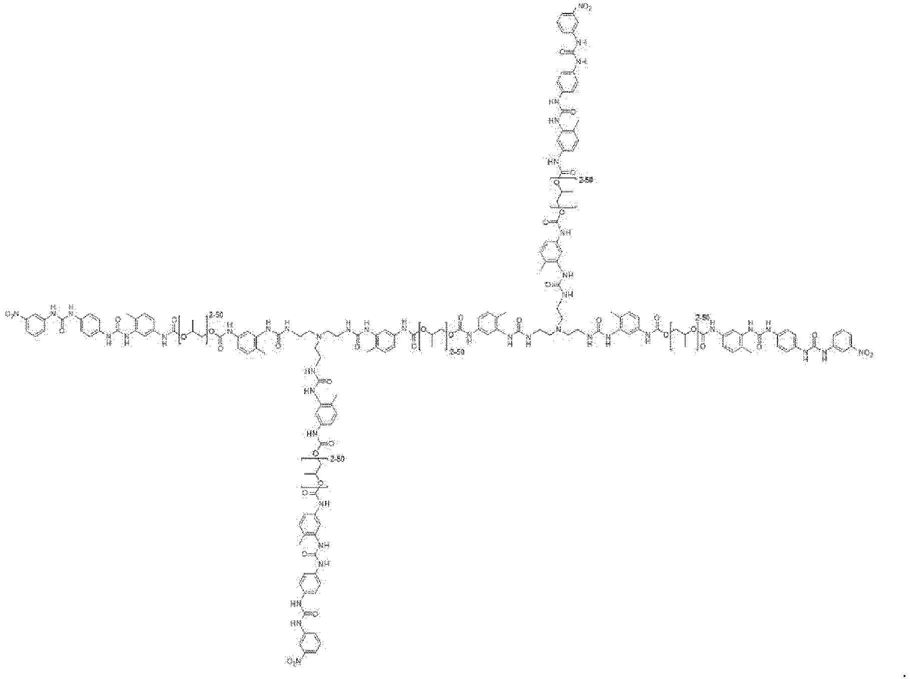

13. Système polymère auto-réparant selon l'une quelconque des revendications précédentes, lesdits groupements *m*-nitrophénylurée étant liés les uns aux autres par des liaisons non covalentes pour former un réseau supramoléculaire.

14. Système de protection polymérique auto-réparant destiné à protéger un tuyau ou un câble comprenant un système polymère tel que défini dans l'une quelconque des revendications 1 à 13.

15. Tuyau ou câble comprenant un système de protection polymérique auto-réparant tel que défini dans la revendication 14.
